(19) Europäisches Patentamt
European Patent Office
Office européen des brevets

(11) Veröffentlichungsnummer: **0 281 611 B1**

(12) **EUROPÄISCHE PATENTSCHRIFT**

(45) Veröffentlichungstag der Patentschrift: **24.11.93**

(51) Int. Cl.$^{5}$: **G02F 1/133**, C09K 19/42, C09K 19/02

(21) Anmeldenummer: **87906179.4**

(22) Anmeldetag: **09.09.87**

(86) Internationale Anmeldenummer: **PCT/EP87/00515**

(87) Internationale Veröffentlichungsnummer: **WO 88/02130 (24.03.88 88/07)**

(54) **FLÜSSIGKRISTALLINE PHASEN FÜR ELEKTROOPTISCHE ANZEIGEELEMENTE BASIEREND AUF DEM ECB-EFFEKT.**

(30) Priorität: **16.09.86 DE 3631415**
**03.04.87 DE 3711306**

(43) Veröffentlichungstag der Anmeldung: **14.09.88 Patentblatt 88/37**

(45) Bekanntmachung des Hinweises auf die Patenterteilung: **24.11.93 Patentblatt 93/47**

(84) Benannte Vertragsstaaten: **CH DE FR GB IT LI NL**

(56) Entgegenhaltungen:
**EP-A- 0 216 672**
**DE-A- 3 437 935**
**DE-A- 3 533 333**
**GB-A- 2 134 110**

(73) Patentinhaber: **MERCK PATENT GmbH**
**Postfach,**
**Frankfurter Strasse 250**
**D-64271 Darmstadt(DE)**

(72) Erfinder: **SCHEUBLE, Bernhard**
**Bluff 100**
**100-1 Yamate-cho**
**Naka-ku**
**Yokohama-shi Kanagawa 231(JP)**
Erfinder: **WEBER, Georg**
**Wilhelm-Leuschner-Strasse 38**
**D-6106 Erzhausen(DE)**
Erfinder: **KURMEIER, Hans-Adolf**
**Hinter der Schule 3a**
**D-6104 Seeheim-Jugenheim(DE)**
Erfinder: **WÄCHTLER, Andreas**
**Goethestrasse 34**
**D-6103 Griesheim(DE)**
Erfinder: **REIFFENRATH, Volker**
**Jahnstrasse 18**
**D-6101 Rossdorf(DE)**
Erfinder: **HITTICH, Reinhard**
**Am Kirchberg 11**
**D-6101 Modautal 1(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft flüssigkristalline Phasen für elektrooptische Anzeigeelemente basierend auf dem ECB-Effekt sowie die Verwendung von Carbonitrilen und anderen Verbindungen als Komponenten flüssigkristalliner Phasen für elektrooptische Anseigeelemente basierend auf dem ECB-Effekt. Die Erfindung betrifft ferner derartige flüssigkristalline Phasen, die mindestens eine Carbonitril-Verbindung enthalten.

Der ECB-Effekt (electrically controlled birefringence) oder auch DAP-Effekt (Deformation aufgerichteter Phasen) wurde erstmals 1971 beschrieben (M.F. Schieckel und K. Fahrenschon, "Deformation of nematic liquid crystals with vertical orientation in electrical fields", Appl. Phys. Lett. 19 (1971), 3912). Es folgten Arbeiten von J.F. Kahn (Appl. Phys. Lett. 20 (1972), 1193) und G. Labrunie und J. Robert (J. Appl. Phys. 44 (1973), 4869).

Die Arbeiten von J. Robert und E. Clerc (SID 80 Digest Techn. Papers (1980), 30), J. Duchene (Displays 7 (1986), 3) und H. Schad (SID 82 Digest Techn. Papers (1982), 244) haben gezeigt, daß flüssigkristalline Phasen hohe Werte für das Verhältnis der elastischen Konstanten $K_3/K_1$, hohe Werte für die optische Anisotropie $\Delta n$ und Werte für die dielektrische Anisotropie $\Delta\epsilon$ zwischen -0,5 und -5 aufweisen müssen, um für hochinformative Anzeigeelemente basierend auf dem ECB-Effekt eingesetzt werden zu können.

Auf dem ECB-Effekt basierende elektrooptische Anzeigeelemente weisen eine homöotrope Randorientierung auf, d. h. die flüssigkristalline Phase hat eine negative dielektrische Anisotropie.

Für die technische Anwendung dieses Effektes in elektrooptischen Anzeigeelementen werden FK-Phasen benötigt, die einer Vielzahl von Anforderungen genügen müssen. Besonders wichtig sind hier die chemische Beständigkeit gegenüber Feuchtigkeit, Luft und physikalischen Einflüssen wie Wärme, Strahlung im infraroten, sichtbaren und ultravioletten Bereich und elektrische Gleich- und Wechselfelder. Ferner wird von technisch verwendbaren FK-Phasen eine flüssigkristalline Mesophase in einem geeigneten Temperaturbereich und eine niedrige Viskosität gefordert.

In keiner der bisher bekannten Reihen von Verbindungen mit flüssigkristalliner Mesophase gibt es eine Einzelverbindung, die allen diesen Erfordernissen entspricht. Es werden daher in der Regel Mischungen von zwei bis 25, vorzugsweise drei bis 18, Verbindungen hergestellt, um als FK-Phasen vervendbare Substanzen zu erhalten. Optimale Phasen konnten jedoch auf diese Weise nicht leicht hergestellt werden, da bisher keine Flüssigkristallmaterialien mit deutlich negativer dielektrischer Anisotropie und/oder entsprechend hoher optischer Anisotropie und/oder besonders hohen Werten für $K_3/K_1$ und ausreichender Langzeitstabilität zur Verfügung standen.

Es besteht somit noch ein großer Bedarf an flüssigkristallinen Phasen mit günstigen Mesobereichen, hohen Werten für $K_3/K_1$, hoher optischer Anisotropie $\Delta n$, negativer dielektrischer Anisotropie $\Delta\epsilon$ und hoher Langzeitstabilität.

In der EP 0 216 672 werden nematische Mischungen für Anzeigen beruhend auf dem ECB-Effekt vorgeschlagen, welche eine Komponente A mit einer Dielektrizitätsanisotropie $< 0,5$, z.B. 4,4'-Dialkylbicyclohexyl-4-carbonitrile, eine Komponente B mit ausgeprägter Nematogenität, z.B. 1-(4-Alkylcyclohexyl)-2-(4'-alkyl-2'-fluorbiphenyl-4-yl)-ethane, und einer Komponente C mit einen hohen Klärpunkt, z.B. Bis-4,4'-(4-alkylcyclohexyl)-biphenyle, enthalten. Diese Mischungen weisen jedoch eine relativ niedrige optische Anisotropie auf.

Der Erfindung lag daher die Aufgabe zugrunde, eine für ECB-Anzeigen geeignete verbesserte Phase aufzufinden, die die oben angegebenen Nachteile nicht oder nur in geringem Maße aufweist und insbesondere durch sehr gute Lichtstabilität und relativ hohe Werte der optischen Anisotropie gekennzeichnet sind.

Diese Aufgabe wird erfindungsgemäß durch die Bereitstellung der flüssigkristallinen Phasen gelöst. Es wurde gefunden, daß die erfindungsgemäßen flüssigkristallinen Phasen sehr günstige Eigenschaften und eine ausgezeichnete Langzeitstabilität aufweisen.

Gegenstand der Erfindung ist somit eine flüssigkristalline Phase für elektrooptische Anzeigeelemente basierend auf dem ECB-Effekt enthaltend zwei Komponenten A und B, die ihrerseits aus einer oder mehreren Einzelverbindungen bestehen, wobei Komponente A aus einer oder mehreren Einzelverbindungen besteht, die eine dielektrische Anisotropie von $\Delta\epsilon \leqq -0,5$ haben, und der flüssigkristallinen Phase eine dielektrische Anisotropie $\leqq -0,3$ verleiht, Komponente B eine ausgeprägte Nematogenität und eine Viskosität von nicht mehr als 30 mPa.s bei 20 °C aufweist, und gegebenenfalls eine Komponente C mit hohem Klärpunkt von mindestens 150 °C, um in der flüssigkristallinen Phase einen Klärpunkt von mindestens 60° zu induzieren, dadurch gekennzeichnet, daß sie eine weitere Komponente D mit höchstens schwach positiver dielektrischer Anisotropie $\leqq 1,0$ und einer optischen Anisotropie von mindestens 0,2 enthält, wobei zur Erzielung besonders kurzer Schaltzeiten die Komponente A auch ganz oder teilweise durch geeignete Einzelverbindungen der Komponente D mit deutlich negativer dielektrischer Anisotropie ersetzt sein können.

Gegenstand der Erfindung ist insbesondere eine flüssigkristalline Phase, deren Komponente A eine oder mehrere Verbindungen mit einem Strukturelement

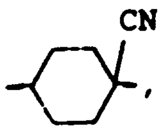, -CHCN-, 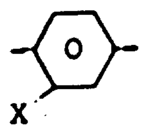, 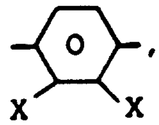, 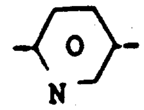 oder 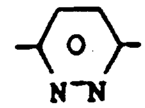

enthält, worin X Halogen oder CN bedeutet.

Gegenstand der Erfindung ist auch eine flüssigkristalline Phase, deren Komponente B monotrop oder enantiotrop nematisch ist, keine smektischen Phasen aufweist und in Flüssigkristallmischungen das Auftreten von smektischen Phasen bis zu sehr tiefen Temperaturen verhindert, sowie eine flüssigkristalline Phase, deren Komponente B mindestens eine Verbindung der Formel V enthält,

$R^1$-$A^5$-$Z^1$-$A^6$-$R^2$ V

worin

$R^1$ und $R^2$ jeweils unabhängig voneinander eine Alkylgruppe mit jeweils 1 bis 15 C-Atomen, worin auch eine oder mehrere $CH_2$-Gruppen durch eine Gruppierung ausgewählt aus der Gruppe -O-, -S-, -CO-, -CH-Halogen-, -CHCN-, -O-CO-, -O-COO-, -CO-O- und -CH=CH- oder auch durch eine Kombination von zwei geeigneten Gruppierungen ersetzt sein können, wobei zwei Heteroatome nicht direkt miteinander verknüpft sind,

$Z^1$ -CO-O-, -O-CO-, $-CH_2CH_2-$, $-OCH_2-$, $-CH_2O-$ oder eine Einfachfindung, und

$A^5$ und $A^6$ jeweils unabhängig voneinander trans-1,4-Cyclohexylen oder unsubstituiertes oder durch Fluor substituiertes 1,4-Phenylen bedeuten.

Gegenstand der Erfindung ist ferner eine flüssigkristalline Phase, deren Komponente D mindestens eine Tolanverbindung mit dem Strukturelement

$-Q^1-C{\equiv}C-Q^2-$

enthält, worin

$Q^1$ und $Q^2$ jeweils unabhängig voneinander unsubstituiertes oder ein- oder mehrfach durch Halogenatome, $CH_3$- und/oder Nitrilgruppen substituiertes 1,4-Phenylen bedeutet, eine der Gruppe $Q^1$ und $Q^2$ auch Pyridin-2,5-diyl,

sowie eine flüssigkristalline Phase für elektrooptische Anzeigeelemente basierend auf dem ECB-Effekt mit mindestens zwei flüssigkristallinen Komponenten, dadurch gekennzeichnet, daß sie mindestens eine Verbindung der Formel I enthält,

$R^1-(A^o-Z^o)_p-A-R^2$ I

worin

$R^1$ und $R^2$ jeweils unabhängig voneinander eine Alkylgruppe mit jeweils 1 bis 15 C-Atomen, worin auch eine oder mehrere $CH_2$-Gruppen durch eine Gruppierung ausgewählt aus der Gruppe -O-, -S-, -CO-, -CH-Halogen, -CHCN-, -O-CO-, -O-COO-, -CO-O- und -CH=CH- oder auch durch eine Kombination von zwei geeigneten Gruppierungen ersetzt sein können, wobei zwei Heteroatome nicht direkt miteinander verknüpft sind,

A 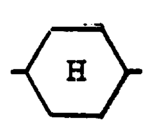, 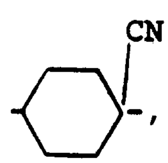, 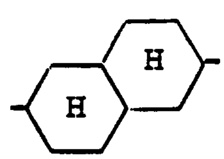, 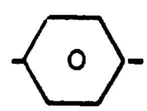,

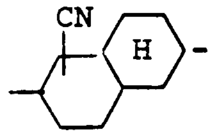, 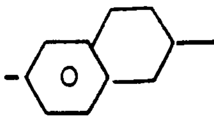 oder 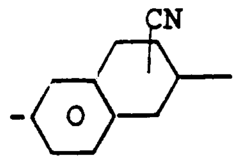

oder eine dieser Gruppen, worin eine oder mehrere $CH_2$-Gruppen durch O und/oder S oder aliphatische und/oder aromatische CH-Gruppen durch N ersetzt sind,

A° jeweils unabhängig voneinander unsubstituiertes oder ein- oder mehrfach durch Halogenatome, $CH_3$- und/oder Nitrilgruppen substituiertes 1,4-Cyclohexylen, worin auch eine oder zwei nicht benachbarte $CH_2$-Gruppen durch -O- und/oder -S- und/oder eine

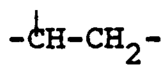 Gruppierung

durch

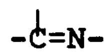

ersetzt sein können (Cy), oder unsubstituiertes oder ein- oder mehrfach durch Halogenatome, $CH_3$- und/oder Nitrilgruppen substituiertes 1,4-Phenylen, worin auch eine oder mehrere CH-Gruppen durch N ersetzt sein können (Ph) bedeutet, einer der Reste A° auch 2,6-Naphthylen (Na) oder Tetrahydro-2,6-naphthylen (4H-Na), gegebenenfalls durch Halogen oder CN substituiert,

Z° jeweils unabhängig voneinander -CO-O-, -O-CO-, $-CH_2O-$, $-OCH_2-$, $-CH_2CH_2-$, $-CHCN-CH_2-$, $-CH_2-CHCH-$ oder eine Einfachbindung, und

p 1, 2 oder 3, oder im Falle A = Tetra- oder Octahydrophenanthren auch O bedeutet, wobei im Falle A =

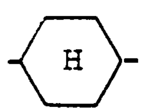, 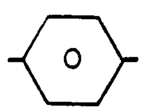, 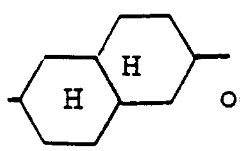 oder 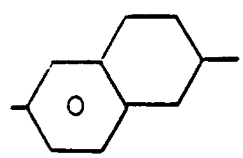

mindestens eine Gruppe Z° $-CHCNCH_2-$ oder $-CH_2CHCN-$ bedeutet und/oder in mindestens einer der Gruppen $R^1$ und $R^2$ mindestens eine $CH_2$-Gruppe durch -CHCN- ersetzt ist.

Gegenstand der Erfindung ist auch eine Phase, die mindestens eine Verbindung der Formel II enthält,

$R^3-(A^1-Z^1)_m-A-(Z^2-A^2)_n-R^4$ II

worin

$R^3$ und $R^4$ jeweils unabhängig voneinander eine Alkylgruppe mit jeweils 1 bis 15 C-Atomen, worin auch eine oder mehrere $CH_2$-Gruppen durch eine Gruppierung ausgewählt aus der Gruppe -O-, -S-, -CO-, -CH-Halogen-, -CHCN-, -O-CO-, -O-COO-, -CO-O- und -CH=CH- oder auch durch eine Kombination von zwei geeigneten Gruppierungen ersetzt sein können, wobei zwei Heteroatome nicht direkt miteinander verknüpft sind,

$A^1$ und $A^2$ jeweils unabhängig voneinander unsubstituiertes oder ein- oder mehrfach durch Halogenatome, $CH_3$- und/oder Nitrilgruppen substituiertes 1,4-Cyclohexylen, worin auch eine oder zwei nicht benachbarte $CH_2$-Gruppen durch -O- und/oder -S- und/oder eine

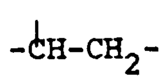 Gruppierung

durch

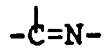

ersetzt sein können (Cy), oder unsubstituiertes oder ein- oder mehrfach durch Halogenatome, $CH_3$- und/oder Nitrilgruppen substituiertes 1,4-Phenylen, worin auch eine oder mehrere CH-Gruppen durch N ersetzt sein können (Ph) bedeutet, einer der Reste $A^o$ auch 2,6-Naphthylen (Na) oder Tetrahydro-2,6-naphthylen (4H-Na), gegebenenfalls durch Halogen oder CN substituiert,

- A: 2-Fluor-1,4-phenylen, 2,3-Difluor-1,4-phenylen oder in 2-, 3-, 2'- und/oder 3'-Position ein oder mehrfach durch Fluor substituiertes 4'4'-Biphenylyl,
- $Z^1$ und $Z^2$: jeweils -CO-O-, -O-CO-, $-CH_2CH_2-$, $-OCH_2-$, $-CH_2O-$ oder eine Einfachbindung,
- m: 1 oder 2 und
- n: 0 oder 1

bedeuten,

wobei für m = 2 die beiden Gruppen $A^1$ und $Z^1$ gleich oder voneinander verschieden sein können, und eine Phase, die mindestens eine Verbindung der Formel III enthält,

$R^3-(A^3-Z^1)_o-Q^1-C{\equiv}C-Q^2-(Z^2-A^4)_p-R^4$ III

worin

- $R^3$ und $R^4$: jeweils unabhängig voneinander eine Alkylgruppe mit jeweils 1 bis 15 C-Atomen, worin auch eine oder mehrere $CH_2$-Gruppen durch eine Gruppierung ausgewählt aus der Gruppe -O-, -S-, -CO-, -CH-Halogen, -CHCN-, -O-CO-, -O-COO-, -CO-O- und -CH=CH- oder auch durch eine Kombination von zwei geeigneten Gruppierungen ersetzt sein können, wobei zwei Heteroatome nicht direkt miteinander verknüpft sind,
- $Q^1$ und $Q^2$: jeweils unabhängig voneinander unsubstituiertes oder ein- oder mehrfach durch Halogenatome, $CH_3$- und/oder Nitrilgruppen substituiertes 1,4-Phenylen bedeutet, eine der Gruppen $Q^1$ und $Q^2$ auch Pyridin-2,5-diyl,
- $A^3$ und $A^3$: jeweils unabhängig voneinander trans-1,4-Cyclohexylen, worin auch eine oder zwei nicht benachbarte $CH_2$-Gruppen durch -O-und/oder -S-ersetzt sein können, oder 1,4-Phenylen, worin auch eine oder mehrere CH-Gruppen durch N ersetzt sein können,
- o und p: jeweils unabhängig voneinander 0 oder 1,

und $Z^1$ und $Z^2$ die bei Formel II angegebene Bedeutung haben.

Gegenstand der Erfindung ist schließlich eine Phase, die mindestens eine Verbindung der Formel IV enthält,

$R^3-(A^1-Z^1)_m-Q^1-C{\equiv}C-R^5$ IV

worin $R^5$ eine Alkylgruppe mit 1 bis 15 C-Atomen bedeutet, und $R^3$, $A^1$, $Z^1$, $Q^1$ und m die oben angegebene Bedeutung haben, sowie eine Phase, deren Komponente D in der Phase das Verhältnis der elastischen Konstanten $K_3/K_1$ auf mindestens 1,2 erhöht.

Gegenstand der Erfindung ist auch die Verwendung von Tolanverbindungen der Formel III nach Anspruch 8 als Komponenten flüssigkristalliner Phasen für elektrooptische Anzeigeelemente basierend auf dem ECB-Effekt, sowie ein elektrooptisches Anzeigeelement basierend auf dem ECB-Effekt, dadurch gekennzeichnet, daß es als Dielektrikum eine der vorstehenden Phasen enthält.

Weiterhin ist Gegenstand der Erfindung eine Phase, die gleichzeitig mindestens eine Verbindung der Formel II enthält,

$R^3-(A^1-Z^1)_m-A-(Z^2-A^2)_n-R^4$ II

worin

- $R^3$ und $R^4$: jeweils unabhängig voneinander eine Alkylgruppe mit jeweils 1 bis 15 C-Atomen, worin auch eine oder mehrere $CH_2$-Gruppen durch eine Gruppierung ausgewählt aus der Gruppe -O-, -S-, -CO-, -CH-Halogen, -CHCN-, -O-CO-, -O-COO-, -CO-O- und -CH=CH- oder auch durch eine Kombination von zwei geeigneten Gruppierungen ersetzt sein können, wobei zwei Heteroatome nicht direkt miteinander verknüpft sind,

$A^1$ und $A^2$ jeweils unabhängig voneinander unsubstituiertes oder ein- oder mehrfach durch Halogenatome, $CH_3$- und/oder Nitril-Gruppen substituiertes 1,4-Cyclohexylen, worin auch eine oder zwei nicht benachbarte $CH_2$-Gruppen durch -O- und/oder -S- und/oder eine -CH-$CH_2$-Gruppierung durch -C=N-ersetzt sein können (Cy), oder unsubstituiertes oder ein- oder mehrfach durch Halogenatome, $CH_3$- und/oder Nitril-Gruppen substituiertes 1,4-Phenylen, worin auch eine oder mehrere CH-Gruppen durch N ersetzt sein können (Ph) bedeutet, einer der Reste $A^o$ auch 2,6-Naphthylen (Na) oder Tetrahydro-2,6-naphthylen (4H-Na), gegebenenfalls durch Halogen oder CN substituiert,

A 2-Fluor-1,4-Phenylen, 2,3-Difluor-1,4-phenylen oder in 2- ,3-, 2'- und/oder 3'-Position ein oder mehrfach durch Fluor substituiertes 4,4'-Biphenylyl,

$Z^1$ und $Z^2$ jeweils -CO-O-, -O-CO-, -$CH_2CH_2$-, -$OCH_2$-, -$CH_2O$- oder eine Einfachbindung,

m 1 oder 2 und

n 0 oder 1

bedeuten,

wobei für m = 2 die beiden Gruppen $A^1$ und $Z^1$ gleich oder voneinander verschieden sein können, eine Phase, die mindestens eine Verbindung der Formel III enthält,

$$R^3\text{-}(A^3\text{-}Z^1)_o\text{-}Q^1\text{-}C{\equiv}C\text{-}Q^2\text{-}(Z^2\text{-}A^4)_p\text{-}R^4 \qquad III$$

worin

$R^3$ und $R^4$ jeweils unabhängig voneinander eine Alkylgruppe mit jeweils 1 bis 15 C-Atomen, worin auch eine oder mehrere $CH_2$-Gruppen durch eine Gruppierung ausgewählt aus der Gruppe -O-, -S-, -CO-, -CH-Halogen-, -CHCN-, -O-CO-, -O-COO-, -CO-O- und -CH=CH- oder auch durch eine Kombination von zwei geeigneten Gruppierungen ersetzt sein können, wobei zwei Heteroatome nicht direkt miteinander verknüpft sind,

$Q^1$ und $Q^2$ jeweils unabhängig voneinander unsubstituiertes oder ein- oder mehrfach durch Halogenatome, $CH_3$- und/oder Nitrilgruppen substituiertes 1,4-Phenylen bedeutet, eine der Gruppen $Q^1$ und $Q^2$ auch Pyridin-2,5-diyl,

$A^3$ und $A^4$ jeweils unabhängig voneinander trans-1,4-Cyclohexylen, worin auch eine oder zwei nicht benachbarte $CH_2$-Gruppen durch -O- und/oder -S- ersetzt sein können oder 1,4-Phenylen, worin auch eine oder mehrere CH-Gruppen durch N ersetzt sein können,

o und p jeweils unabhängig voneinander 0 oder 1,

und $Z^1$ und $Z^2$ die bei Formel II angegebene Bedeutung haben und eine Phase, die zusätzlich mindestens eine Verbindung der Formel IV enthält,

$$R^3\text{-}(A^1\text{-}Z^1)_m\text{-}Q^1\text{-}C=C\text{-}R^5 \qquad IV$$

worin $R^5$ eine Alkylgruppe mit 1 bis 15 C-Atomen bedeutet, und $R^3$, $A^1$, $Z^1$, $Q^1$ und m die oben angegebene Bedeutung haben, sowie ein elektrooptisches Anzeigeelement basierend auf dem ECB-Effekt, welches als Dielektrikum eine der oben beschriebenen Phasen enthält.

Die Herstellung der erfindungsgemäßen Phasen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z. B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebenen Zusätze enthalten. Beispielsweise können 0-15 % pleochroitische Farbstoffe zugesetzt werden, ferner Leitsalze, vorzugsweise Ethyl-dimethyldodecylammonium-4-hexoxybenzoat, Tetrabutylammoniumtetraphenylboranat oder Komplexsalze von Kronenethern (vgl. z. B. Haller et al., Mol. Cryst. Liq. Cryst. Band 24, Seiten 249-258 (1973)) zur Verbesserung der Leitfähigkeit oder Substanzen zur Veränderung der dielektrischen Anisotropie, der Viskosität und/oder der Orientierung der nematischen Phasen. Derartige Substanzen sind z. B. in den DE-OS 22 09 127, 22 40 864, 23 21 632, 23 38 281, 24 50 088, 26 37 430 und 28 53 728 beschrieben.

Die die einzelnen Komponenten A, B, C und D bildenden Einzelverbindungen sind entweder bekannt oder ihre Herstellungsweisen sind für den einschlägigen Fachmann aus dem Stand der Technik ohne weiteres abzuleiten, da sie auf in der Literatur beschriebenen Standardverfahren beruhen. Das gleiche gilt für die einzelnen Verbindungen der Formeln I, II, III, IV und V.

Komponente A weist eine deutlich negative dielektrische Anisotropie (Δϵ) auf und verleiht der flüssigen Phase eine dielektrische Anisotropie ≦ -0,3, vorzugsweise ≦ -0,5. Der Wert Δϵ der flüssigkristallinen Phase liegt vorzugsweise im Bereich zwischen -0,3 und-5,0, vorzugsweise zwischen -0,5 und-5,0. Für Komponente A wird vorzugsweise eine (oder mehrere) Einzelverbindung(en) gewählt, die einen Wert Δϵ ≦ -0,5, vorzugsweise Δϵ ≦ -0,8 haben. Dieser Wert muß umso negativer sein, je kleiner der Anteil der Komponente A an der Gesamtmischung ist. Bei sehr hohem Anteil der Komponente A kann der Wert Δϵder Komponente A auch nur schwach negativ sein, z. B. im Bereich von -0,5 bis -1,0.

Im Prinzip können für Komponente A alle bekannten flüssigkristallinen Verbindungen mit deutlich negativer dielektrischer Anisotropie (vorzugsweise ist Δϵ ≦ -0,3, insbesondere ≦ -0,5) umgesetzt werden. Derartige Verbindungen sind dem Fachmann bekannt und beispielsweise beschrieben in D. Demus, et al., Flüssige Kristalle in Tabellen II, VEB Deutscher Verlag für Grundstoffindustrie, Leipzig, 1984, sowie in H. Kelker und R. Hatz, Handbook of Liquid Crystals, Weinheim, Verlag Chemie, 1980 und in den DE-OS 33 32 691 und DE-OS 33 32 692. Besonders bevorzugt sind die im folgenden beschriebenen Verbindungen der Formel I. Ferner sind bevorzugt Verbindungen enthaltend ein 2,3-Dicyan-1,4-phenylen-Strukturelement. Diese Verbindungen sind z. B. beschrieben in den Offenlegungsschriften WO 85/04874, DE-OS 34 10 734, DE-OS 29 33 563, EP-OS 0 084 194, EP-OS 0 085 995, DE-OS 33 24 686, EP-OS 0 087 963 und DE-OS 29 37 700. Weiterhin bevorzugt sind Verbindungen enthaltend ein 2- bzw. 3-Cyan-1,4-phenylen-Strukturelement,wie z.B. die in DE-OS 32 05 766 beschriebenen Bi-, Terphenyl- und Cyclohexylbiphenyl-Verbindungen.

Vorzugsweise enthält Komponente A eine oder mehrere Verbindungen mit einem Strukturelement

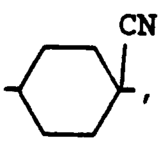, -CHCN-, 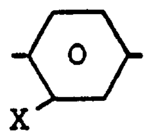, 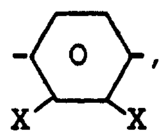, 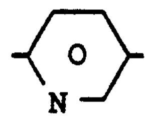 oder 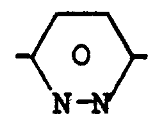

worin X Halogen oder CN bedeutet.

Falls X Halogen bedeutet, sind Fluor und Chlor, insbesondere Fluor, bevorzugt. Besonders bevorzugt sind Verbindungen mit einem Strukturelement

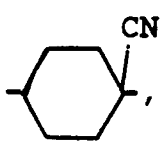, -CHCN-, 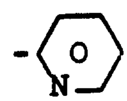 oder 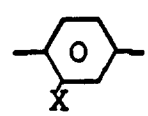,

Diese Verbindungen sind teilweise bekannt. Fundstellen sind im vor- und nachstehendem Text genannt. Alle für diese Anwendung in Frage kommenden Verbindungen können nach in der Literatur beschriebenen Standardverfahren hergestellt werden, die dem einschlägigen Fachmann ohne weiteres zugänglich sind.

Besonders bevorzugte Einzelverbindungen der Komponente A sind diejenigen der Formel I sowie Flüssigkristallverbindungen enthaltend das Strukturelement:

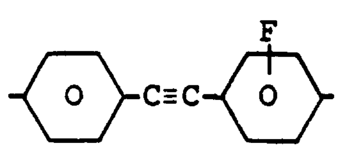

Diese lateral fluorierten Tolanderivate zeichnen sich durch eine hohe optische Anisotropie aus und können als Basiskomponenten für erfindungsgemäße flüssigkristalline Phasen benutzt werden, z. B. in einem Anteil von 10 bis 90 %, vorzugsweise 20 bis 80 %.

Besonders bevorzugte lateral fluorierte Tolanderivate sind diejenigen der Formel VI,

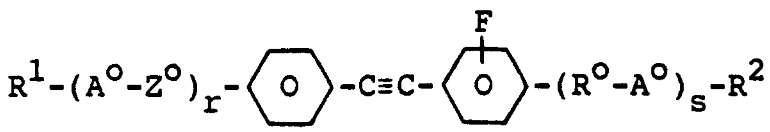 VI

worin $R^1$, $R^2$, $A^o$ und $Z^o$ die bei Formel I angegebene Bedeutung haben und r und s jeweils unabhängig voneinander 0 oder 1 bedeuten. Besonders bevorzugte kleinere Gruppen sind diejenigen der Teilformeln VIa bis VIf:

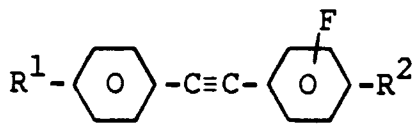 VIa

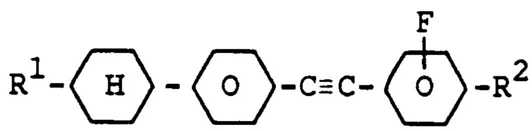 VIb

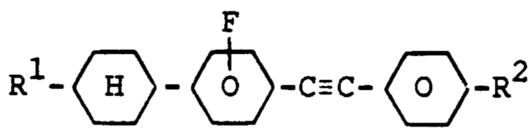 VIc

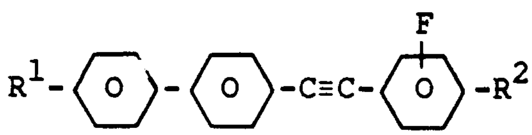 VId

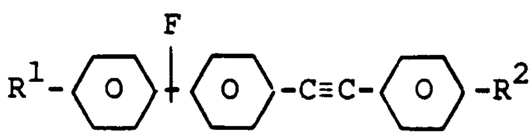 VIe

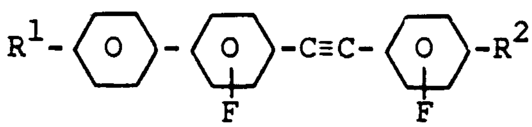 VIf

$R^1$ und $R^2$ bedeuten hier vorzugsweise jeweils unabhängig voneinander n-Alkyl oder n-Alkoxy mit jeweils 1 bis 7 C-Atomen. Ebenfalls bevorzugt sind Verbindungen der Formel VI, die anstelle der fluorierten 1,4-Phenylengruppe eine Pyridin-2,5-diyl-Gruppe oder eine 2,3-Difluor-1,4-phenylengruppe enthalten.

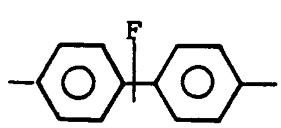

ist eine in 2-, 3-, 2'- oder 3'-Position durch fluor substituierte 4,4'-Biphenylyl-Gruppe.

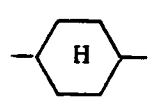

ist vorzugsweise -trans-1,4-Cyclohexylen.

Bevorzugte Verbindungen dieses Typs sind diejenigen der Formeln VIg bis VIk,

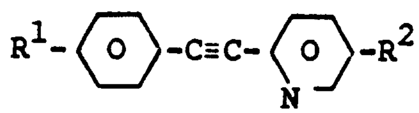

VIg

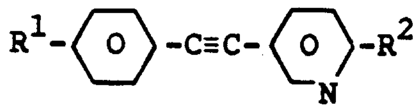

VIh

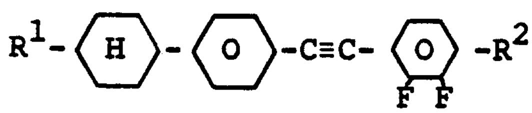

VIj

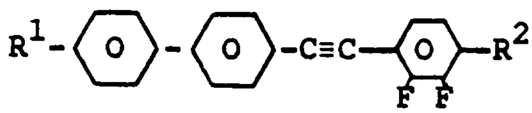

VIk

worin $R^1$ und $R^2$ die oben angegebene bevorzugten Bedeutungen haben.

Falls Komponente A Verbindungen mit $\Delta\epsilon \leqq -2$ enthält, ist der Anteil der Komponente A in der flüssigkristallinen Phase vorzugsweise 5 bis 50 %, insbesondere bevorzugt 5 bis 30 %.

Komponente B weist eine ausgeprägte Nematogenität und eine Viskosität von nicht mehr als 30 mPa.s, vorzugsweise nicht mehr als 25 mPa.s, bei 20 °C auf. Besonders bevorzugte Einzelverbindungen der Komponente B sind extrem niedrig-viskose nematische Flüssigkristalle mit nicht mehr als 18, vorzugsweise nicht mehr als 12 mPa.s bei 20 °C. Komponente B ist monotrop oder enantiotrop nematisch, weist keine smektischen Phasen auf und kann in Flüssigkristallmischungen das Auftreten von smektischen Phasen bis zu sehr tiefen Temperaturen verhindern. Versetzt man beispielsweise eine smektische Flüssigkristallmischung mit jeweils gleichem Prozentsatz verschiedener Materialien mit hoher Nematogenität, so kann durch den erzielten Grad der Unterdrückung smektischer Phasen die Nematogenität dieser Materialien verglichen werden.

Ein Material, welches bis zu einer niedrigeren Temperatur das Auftreten einer smektischen Phase verhindert, ist somit durch eine höhere Nematogenität gekennzeichnet. Der Fachmann kann leicht feststellen, welche niedrigviskosen Materialien hier geeignet sind. Beispielsweise muß ein derartiges Material in einer Mischung bestehend aus 45 % trans,trans-4-Methoxy-4'-propylcyclohexylcyclohexan, 8 % trans,trans-4-Ethoxy-4'-propylcyclohexylcyclohexan, 18 % trans,trans-4-Propoxy-4'-propylcyclohexylcyclohexan, 13 % trans,trans-4-Ethoxy-4'-butylcyclohexylcyclohexan, 8 % trans,trans-4-Ethoxy-4'-pentylcyclohexylcyclohexan und 8 % trans,trans-4-Methoxy-4'-pentylcyclohexylcyclohexan, die einen Übergang smektischnematisch bei +13 °C zeigt, bei einer Zugabe von 20 % den Übergang smektisch-nematisch bis zu Temperaturen $\leqq$ 0 °C, vorzugsweise bis < -10 °C, insbesondere bis < -20 °C zurückdrängen. Dem Fachmann sind aus der Literatur (siehe oben) eine Vielzahl geeigneter Materialien bekannt. Besonders bevorzugt sind Verbindungen der Formel V

$R^1$-$A^5$-$Z^1$-$A^6$-$R^2$ V

worin

| | |
|---|---|
| $R^1$ und $R^2$ | jeweils unabhängig voneinander eine Alkylgruppe mit jeweils 1 bis 15 C-Atomen, worin auch eine oder mehrere $CH_2$-Gruppen durch eine Gruppierung ausgewählt aus der Gruppe -O-, -S-, -CO-, -CH-Halogen-, -CHCN-, -O-CO-, -O-COO-, -CO-O- und -CH=CH- oder auch durch eine Kombination von zwei geeigneten Gruppierungen ersetzt sein können, wobei zwei Heteroatome nicht direkt miteinander verknüpft sind, |
| $Z^1$ | -CO-O-, -O-CO-, $-CH_2CH_2-$, $-OCH_2-$, $-CH_2O-$ oder eine Einfachfindung, und |
| $A^5$ und $A^6$ | jeweils unabhängig voneinander trans-1,4-Cyclohexylen oder unsubstituiertes oder durch Fluor substituiertes 1,4-Phenylen bedeuten. |

$R^1$ und $R^2$ haben die bei Formel I angegebenen bevorzugten Bedeutungen. $Z^1$ ist vorzugsweise -CO-O- oder eine Einfachbindung, insbesondere bevorzugt eine Einfachbindung. $A^5$ ist vorzugsweise trans-1,4-Cyclohexylen. Ferner sind jedoch auch Verbindungen der Formel II, soweit sie die Anforderungen für Verbindungen der Komponente B erfüllen, bevorzugt für Komponente B. Einige kleinere Gruppen von bevorzugten Verbindungen für Komponente B sind im folgenden angegeben:

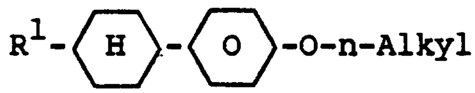 B1

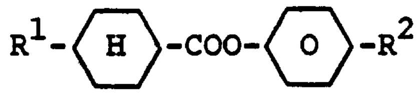 B2

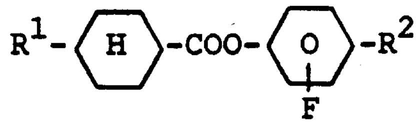 B3

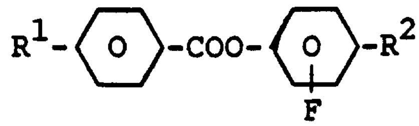 B4

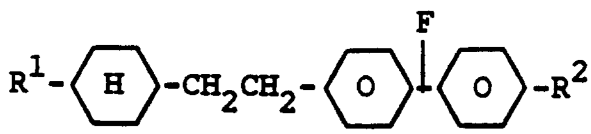 B5

Besonders bevorzugt bei B1 sind Verbindungen der Teilformel B11,

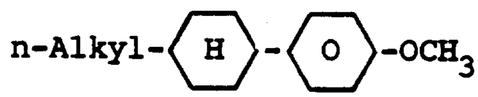 B11

worin n-Alkyl 2 bis 5, vorzugsweise 3, C-Atome hat.

Der Anteil der Komponente B in der flüssigkristallinen Phase ist abhängig von der Nematogenität der gewählten Einzelverbindung(en) und deren Klärpunkt. Der Fachmann kann diesen Anteil jedoch leicht für die gewünschte Anwendung nach Routinemethoden bestimmen. Normalerweise liegt der Anteil der Komponente B zwischen 5 und 40 %, vorzugsweise 10 bis 30 %.

Falls die aus den Komponenten A, B und D bzw. aus B und D entwickelte Mischung den für die jeweilige Anwendung erforderlichen Klärpunkt nicht erreicht, ist ein Zusatz einer Komponente C mit hohem Klärpunkt von vorzugsweise mindestens 150 °C, vorzugsweise mindestens 200 °C, notwendig. Der Anteil von Komponente D wird nach Routinemethoden so gewählt, daß in der flüssigkristallinen Phase ein Klärpunkt von mindestens 60 °C, vorzugsweise mindestens 80 °C, insbesondere für viele Anwendungen mindestens 100 °C, erreicht wird. Für Komponente C geeignete Verbindungen sind in der Literatur (siehe oben) vielfach beschrieben und dem Fachmann bekannt. Geeignet sind beispielsweise hochklärende Verbindungen der Formel II. Kleinere Gruppen von geeigneten Verbindungen sind diejenigen der Formel C1

$R^1$-$Q^1$-$(Q^2)_n$-$Q^3$-$R^2$ C1

worin $Q^1$, $Q^2$ und $Q^3$ unabhängig voneinander

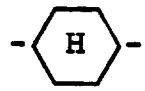

oder

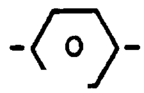

bedeuten, eine der Gruppen $Q^1$ bis $Q^3$ auch

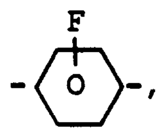

n ist 1 oder 2. $R^1$ und $R^2$ haben die bei Formel I angegebenen bevorzugten Bedeutungen. Ferner geeignet sind Verbindungen der oben angegebenen Formel C1, worin zwischen zwei der Gruppen $Q^1$, $Q^2$ bzw. $Q^3$ ein Brückenglied -CO-O-, -O-CO- oder $-CH_2CH_2-$ eingeschoben ist.

Komponente D enthält nematische Verbindungen mit höchstens schwach positiver dielektrischer Anisotropie ($\Delta\epsilon$) und einer optischen Anisotropie ($\Delta n$) von mindestens 0,2. Vorzugsweise ist $\Delta\epsilon \leqq +1{,}0$, insbesondere jedoch $\leqq$ - + 0,5. Besonders bevorzugt sind Verbindungen mit $\Delta\epsilon \leqq 0$. $\Delta n$ ist vorzugsweise $\geqq$ 0,22, insbesondere jedoch $\geqq$ 0,30. Derartige Verbindungen sind in der Literatur (siehe oben) beschrieben. Weitere Fundstellen sind USP 3,925,482, FR 22 34 261-A, JP-OS 280441/86, EP-OS 0 058 981, DE-OS 37 09 167 und DE-OS 37 10 069.

$\Delta n$ wird wie üblich bei 589 nm und 20 °C gemessen. Vorzugsweise handelt es sich hier um Tolanverbindungen enthaltend das Strukturelement

$-Q_1-C{\equiv}C-Q_2$,

worin

$Q^1$ und $Q^2$ jeweils unabhängig voneinander unsubstituiertes oder ein- oder mehrfach durch Halogenatome, $CH_3$- und/oder Nitrilgruppen substituiertes 1,4-Phenylen bedeutet, eine der Gruppen $Q^1$ und $Q^2$ auch Pyridin-2,5-diyl.

Besonders bevorzugt sind die Verbindungen der Formel III

$R^3-(A^3-Z^1)_o-Q^1-C{\equiv}C-Q^2-(Z^2-A^4)_p-R^4$ III

worin

$R^3$ und $R^4$ jeweils unabhängig voneinander eine Alkylgruppe mit jeweils 1 bis 15 C-Atomen, worin auch eine oder mehrere $CH_2$-Gruppen durch eine Gruppierung ausgewählt aus der Gruppe -O-, -S-, -CO-, -CH-Halogen-, -CHCN-, -O-CO-, -O-COO-, -CO-O- und -CH = CH- oder auch durch eine Kombination von zwei geeigneten Gruppierungen ersetzt sein können, wobei zwei Heteroatome nicht direkt miteinander verknüpft sind,

$Q^1$ und $Q^2$ jeweils unabhängig voneinander unsubstituiertes oder ein- oder mehrfach durch Halogenatome, $CH_3$- und/oder Nitrilgruppen substituiertes 1,4-Phenylen bedeutet, eine der Gruppen $Q^1$ und $Q^2$ auch Pyridin-2,5-diyl,

$A^3$ und $A^3$ jeweils unabhängig voneinander trans-1,4-Cyclohexylen, worin auch eine oder zwei nicht benachbarte $CH_2$-Gruppen durch -O-und/oder -S-ersetzt sein können, oder 1,4-Phenylen, worin auch eine oder mehrere CH-Gruppen durch N ersetzt sein können,

o und p jeweils unabhängig voneinander 0 oder 1,

und $Z^1$ und $Z^2$ die bei Formel II angegebene Bedeutung haben.

Ebenfalls bevorzugte Verbindungen für Komponente D sind die neuen Verbindungen der Formel I'

$R^{1'}$-$(A^{1'}$-$Z^{1'})_m$-$A^{3'}$-C≡C-$A^{4'}$-$(A^{2'})_n$-$R^{2'}$ I'

worin

$R^{1'}$ und $R^{2'}$ jeweils unabhängig voneinander Alkyl mit bis zu 15 C-Atomen, worin auch eine oder zwei nicht benachbarte $CH_2$-Gruppen durch -O-ersetzt sein können, einer der Reste $R^1$ und $R^2$ auch Halogen,

$A^{1'}$ und $A^{2'}$ jeweils unabhängig voneinander unsubstituiertes oder ein- oder mehrfach durch Halogen und/oder Nitril substituiertes 1,4-Phenylen, worin auch eine oder mehrere CH-Gruppen durch N ersetzt sein können, 1,4-Bicyclo(2.2.2)octylen oder trans-1,4-Cyclohexylen, worin auch eine oder zwei nicht benachbarte $CH_2$-Gruppen durch -O- und/oder -S-Atome ersetzt sein können,

$Z^{1'}$ -$CH_2CH_2$-, -$CH_2O$-, -CO-O-, -$OCH_2$-, -O-CO- oder eine Einfachbindung,

m und n jeweils unabhängig voneinander 0 oder 1

und

$A^{3'}$ und $A^{4'}$ jeweils unabhängig voneinander unsubstituiertes oder ein- oder mehrfach durch Halogen und/oder Nitril substituiertes 1,4-Phenylen

bedeutet, mit den Maßgaben, daß

a) im Falle m = n = 0 und $A^{3'}$ und $A^{4'}$ = unsubstituiertes 1,4-Phenylen $R^{1'}$ eine Alkoxygruppe und $R^{2'}$ Fluor bedeutet oder eine der Reste $R^{1'}$ oder $R^{2'}$ eine Alkylgruppe ist, worin mindestens zwei $CH_2$-Gruppen durch -O- ersetzt sind,

b) im Falle m = n = 0 und $A^{3'}$ und/oder $A^{4'}$ = substituiertes 1,4-Phenylen mindestens eine der Gruppen $A^{1'}$, $A^{2'}$, $A^{3'}$ und $A^{4'}$ mehrfach durch Halogen substituiert ist,

c) im Falle $A^{3'}$ und $A^{4'}$ = unsubstituiertes 1,4-Phenylen, m = 1 und $Z^{1'}$ = eine Einfachbindung einer der Reste $R^{1'}$ oder $R^{2'}$ eine Alkoxygruppe bedeutet und der andere dann Halogen oder Alkyl ist, oder daß

d) im Falle $A^{3'}$ und $A^{4'}$ = unsubstituiertes 1,4-Phenylen, m = 1 und $Z^{1'}$ = -CO-O- einer der Reste $R^{1'}$ oder $R^{2'}$ eine Alkoxygruppe und der andere dann Halogen oder Alkyl ist.

Der Einfachheit halber bedeuten im folgenden Phe eine unsubstituierte 1,4-Phenylengruppe, PheX eine ein- oder mehrfach substituierte 1,4-Phenylengruppe (X bedeutet Halogen und/oder Nitril), Cyc eine trans-1,4-Cyclohexylengruppe, Dio eine 1,3-Dioxan-2,5-diylgruppe, Pyd eine Pyridin-2,5-diylgruppe, Pyr eine Pyrimidin-2,5-diylgruppe, Dit eine 1,3-Dithian-2,5-diylgruppe und Bco eine 1,4-Bicyclo(2.2.2)octylengruppe.

Die Verbindungen der Formel I' umfassen dementsprechend Verbindungen der Teilformeln Ia (mit zwei Ringen), Ib bis Id (mit drei Ringen) und Ie bis If (mit vier Ringen):

$R^{1'}$-$A^{3'}$-C≡C-$A^{4'}$-$R^{2'}$ Ia

$R^{1'}$-$A^{1'}$-$A^{3'}$-C≡C-$A^{4'}$-$R^{2'}$ Ib

$R^{1'}$-$A^{1'}$-$Z^{1'}$-$A^{3'}$-C≡C-$A^{4'}$-$R^{2'}$ Ic

$R^{1'}$-$A^{3'}$-C≡C-$A^{4'}$-$A^{2'}$-$R^{2'}$ Id

$R^{1'}$-$A^{1'}$-$A^{3'}$-C≡C-$A^{4'}$-$A^{2'}$-$R^{2'}$ Ie

$R^{1'}$-$A^{1'}$-$Z^{1'}$-$A^{3'}$-C≡C-$A^{4'}$-$A^{2'}$-$R^{2'}$ If

Die bevorzugten Verbindungen der Teilformel Ia umfassen solche der Teilformeln Iaa bis Iac:

$R^{1'}$-Phe-C≡C-Phe-$R^{2'}$ Iaa

$R^{1'}$-Phe-C≡C-PheX-$R^{2'}$ Iab

$R^{1'}$-PheX-C≡C-PheX-$R^{2'}$ Iac

Darunter sind diejenigen der Formeln Iaa und Iab besonders bevorzugt.

Die bevorzugten Verbindungen der Teilformeln Ib, Ic und Id umfassen solche der Teilformeln I1 bis I24:

$R^{1'}$-Phe-Phe-C≡C-Phe-$R^{2'}$ I1

$R^{1'}$-Phe-Phe-C≡C-PheX-$R^{2'}$ I2

$R^{1'}$-Phe-PheX-C≡C-Phe-$R^{2'}$ I3

$R^{1'}$-Phe-PheX-C≡C-PheX-$R^{2'}$ I4

$R^{1'}$-Cyc-Phe-C≡C-Phe-$R^{2'}$ I5

$R^{1'}$-Cyc-Phe-C≡C-PheX-$R^{2'}$ I6

$R^{1'}$-Cyc-PheX-C≡C-Phe-$R^{2'}$ I7

$R^{1'}$-Dio-Phe-C≡C-Phe-$R^{2'}$ I8

$R^{1'}$-Dio-Phe-C≡C-PheX-$R^{2'}$ I9

$R^{1'}$-Dit-Phe-C≡C-PheX-$R^{2'}$ I10

$R^{1'}$-Dit-Phe-C≡C-Phe-$R^{2'}$ I11

$R^{1'}$-Pyd-Phe-C≡C-Phe-$R^{2'}$ I12

$R^{1'}$-Pyr-Phe-C≡C-Phe-$R^{2'}$ I13

$R^{1'}$-Bco-Phe-C≡C-Phe-$R^{2'}$ I14

$R^{1'}$-PheX-C≡C-Phe-Pyd-$R^{2'}$ I15

$R^{1'}$-PheX-C≡C-Phe-Pyr-$R^{2'}$ I16

$R^{1'}$-PheX-C≡C-Phe-Bco-$R^{2'}$ I17

$R^{1'}$-$A^{1'}$-$CH'_2CH'_2$-Phe-C≡-Phe-$R^{2'}$ I18

$R^{1'}$-$A^{1'}$-$CH'_2O$-Phe-C≡C-Phe-$R^{2'}$ I19

$R^{1'}$-$A^{1'}$-$OCH'_2$-Phe-C≡C-Phe-$R^{2'}$ I20

$R^{1'}$-$A^{1'}$-COO-Phe-C≡C-Phe-$R^{2'}$ I21

$R^{1'}$-$A^{1'}$-$CH'_2CH'_2$-Phe-C≡C-PheX-$R^{2'}$ I22

$R^{1'}$-$A^{1'}$-O-CO-Phe-C≡C-Phe-$R^{2'}$ I23

$R^{1'}$-$A^{1'}$-COO-Phe-C≡C-PheX-$R^{2'}$ I24

Darunter sind diejenigen der Formeln I1, I2, I5, I6, I12, I18, I22 und I24 besonders bevorzugt. Besonders bevorzugt sind die Verbindungen der Teilformel I5.

Die bevorzugten Verbindungen der Teilformeln Ie und If umfassen solche der Teilformeln I25 bis I40:

$R^{1'}$-$A^{1'}$-Phe-C≡C-Phe-$A^{2'}$-$R^{2'}$ I25

$R^{1'}$-$A^{1'}$-Phe-C≡C-PheX-$A^{2'}$-$R^{2'}$ I26

$R^{1'}$-Cyc-Phe-C≡C-Phe-Phe-$R^{2'}$ I27

$R^{1'}$-Cyc-$CH_2CH_2$-Phe-C≡C-Phe-Phe-$R^{2'}$ I28

$R^{1'}$-Phe-COO-Phe-C≡C-PheX-Phe-$R^{2'}$ I29

$R^{1'}$-Dio-Phe-C≡C-Phe-Cyc-$R^{2'}$ I30

$R^{1'}$-Cyc-COO-Phe-C≡C-PheX-Phe-$R^{2'}$ I31

$R^{1'}$-Bco-Phe-C≡C-Phe-PheX-$R^{2'}$ I32

$R^{1'}$-Phe-$CH_2CH_2$-Phe-C≡C-Phe-Pyd-$R^{2'}$ I33

$R^{1'}$-Pyr-Phe-C≡C-Phe-Cyc-$R^{2'}$ I34

$R^{1'}$-Phe-$CH_2O$-Phe-C≡C-PheX-Phe-$R^{2'}$ I35

$R^{1'}$-Cyc-$OCH_2$-Phe-C≡C-Phe-Phe-$R^{2'}$ I36

$R^{1'}$-Dit-Phe-C≡C-Phe-Phe-$R^{2'}$ I37

$R^{1'}$-Phe-OCO-PheX-C≡C-Phe-Cyc-$R^{2'}$ I38

$R^{1'}$-Phe-$CH_2O$-Phe-C≡C-Phe-Cyc-$R^{2'}$ I39

$R^{1'}$-Pyd-Phe-C≡C-Phe-PheX-$R^{2'}$ I40

In den Verbindungen der vor- und nachstehenden Formeln bedeuten $R^1$ und $R^2$ vorzugsweise Alkyl, Alkoxy oder eine andere Oxaalkyl- oder Dioxaalkylgruppe.

$A^{1'}$ und $A^{2'}$ bedeuten vorzugsweise 1,4-Cyclohexylen oder 1,4-Phenylen, das durch Halogen und/oder Nitril substituiert sein kann. Falls die 1,4-Phenylengruppe substituiert ist, so ist eine Monosubstitution durch Fluor oder Chlor bevorzugt. Ferner bevorzugt ist eine zweifache Substitution durch Fluor in 2- und 3-Position. Ferner bevorzugt haben $A^{1'}$ und $A^{2'}$ die Bedeutung von Bco, Pyd oder Dio.

$Z^{1'}$ bedeutet vorzugsweise eine Einfachhindung oder eine -$CH_2CH_2$-Gruppe. Ferner bevorzugt ist -CO-O- oder -O-CO-.

m und n bedeuten unabhängig voneinander 0 oder 1, wobei m vorzugsweise 1 und n vorzugsweise 0 ist.

$A^{3'}$ und $A^{4'}$ sind bevorzugt unsubstituiertes 1,4-Phenylen. Falls $A^{3'}$ und $A^{4'}$ substituiertes 1,4-Phenylen bedeuten, so ist eine Monosubstitution durch Fluor oder Chlor bevorzugt, und zwar vorzugsweise o-Stellung zu $R^{2'}$ bzw. $R^{1'}$. Der laterale Substituent kann aber auch in o-Stellung zur -C≡C-Dreifachbindung stehen.

Falls $R^{1'}$ und/oder $R^{2'}$ Alkylreste bedeuten, in denen auch eine ("Alkoxy" bzw. "Oxaalkyl") oder zwei ("Alkoxyalkoxy" bzw. "Dioxaalkyl") nicht benachbarte $CH_2$-Gruppen durch O-Atome ersetzt sein können, so können sie geradkettig oder verzweigt sein. Vorzugsweise sind sie geradkettig, haben 2, 3, 4, 5, 6 oder 7 C-Atome und bedeuten demnach bevorzugt Ethyl, Propyl, Butyl, Pentyl, Hexyl, Heptyl, Ethoxy, Propoxy, Butoxy, Pentoxy, Hexoxy, Heptoxy, 2-Oxapropyl (= Methoxymethyl), 2- (= Ethoxymethyl) oder 3-Oxabutyl (= 2-Methoxyethyl), 2-, 3- oder 4-Oxapentyl, 2-, 3-, 4- oder 5-Oxahexyl, 2-, 3-, 4-, 5- oder 6-Oxaheptyl, ferner Methyl, Octyl, Nonyl, Decyl, Undecyl, Dodecyl, Tridecyl, Tetradecyl, Pentadecyl, Methoxy, Octoxy, Nonoxy, Decoxy, Undecoxy, Dodecoxy, Tridecoxy, Tetradecoxy, Pentadecoxy, 2-, 3-, 4-, 5-, 6- oder 7-Oxaoctyl, 2-, 3-, 4-, 5-, 6-, 7- oder 8-Oxanonyl, 2-, 3-, 4-, 5-, 6-, 7-, 8- oder 9-Oxadecyl, 1,3-Dioxabutyl (= Methoxymethoxy), 1,3-, 1,4- oder 2,4-Dioxapentyl, 1,3-, 1,4-, 1,5-, 2,4-, 2,5- oder 3,5-Dioxahexyl, 1,3-, 1,4-, 1,5-, 1,6-, 2,4-, 2,5-, 2,6-, 3,5-, 3,6- oder 4,6-Dioxaheptyl.

Verbindungen der Formel I' mit verzweigten Flügelgruppen $R^{1'}$ oder $R^{2'}$ können gelegentlich wegen einer besseren Löslichkeit in den üblichen flüssigkristallinen Basismaterialien von Bedeutung sein, insbesondere aber als chirale Dotierstoffe, wenn sie optisch aktiv sind.

Verzweigte Gruppen dieser Art enthalten in der Regel nicht mehr als eine Kettenverzweigung. Bevorzugte verzweigte Rest sind Isopropyl, 2-Butyl (= 1-Methylpropyl), Isobutyl (= 2-Methylpropyl), 2-Methylbutyl, Isopentyl (= 3-Methylbutyl), 2-Methylpentyl, 3-Methylpentyl, 2-Ethylhexyl, 2-Propylpentyl, 2-Octyl, Isopropoxy, 2-Methylpropoxy, 2-Methylbutoxy, 3-Methylbutoxy, 2-Methylpentoxy, 3-Methylpentoxy, 2-Ethylhexoxy, 1-Methylhexoxy, 1-Methylheptoxy (= 2-Octyloxy), 2-Oxa-3-methylbutyl, 3-Oxa-4-methylpentyl, 4-Methylhexyl, 2-Nonyl, 2-Decyl, 2-Dodecyl, 6-Methyloctoxy, 6-Methyloctanoyloxy, 5-Methylheptyloxycarbonyl, 2-Methylbutyryloxy, 3-Methylvaleryloxy, 4-Methylhexanoyloxy, 2-Methyl-3-oxapentyl, 2-Methyl-3-oxahexyl.

Bei Verbindungen mit verzweigten Flügelgruppen umfaßt Formel I' sowohl die optischen Antipoden als auch Racemate sowie deren Gemische.

Unter den Verbindungen der Formel I' und deren Unterformeln sind diejenigen bevorzugt, in denen mindestens einer der darin enthaltenen Beste eine der angegebenen bevorzugten Bedeutungen hat.

Für m = n = 0 sind von den Verbindungen der Formel I' folgende Substanzen der Teilformeln 1-3 besonders bevorzugt:

Alkoxy-Phe-C≡C-Phe-F 1

Alkoxyalkoxy-Phe-C≡C-Phe-Alkyl 2

Alkoxyalkoxy-Phe-C≡C-Phe-Halogen 3

Eine kleinere Gruppe von besonders bevorzugten Verbindungen der Formel I für $m + n \neq 0$ sind solche der Teilformeln 4-18:

Alkyl-Cyc-Phe-C≡C-Phe-Alkoxy 4

Alkyl-Cyc-$CH_2CH_2$-Phe-C≡C-Phe-Alkyl 5

Alkyl-Cyc-$CH_2CH_2$-Phe-C≡C-Phe-Alkoxy 6

Alkyl-Cyc-Phe-C≡C-PheF-Alkoxy 7

Alkyl-Phe-$CH_2CH_2$-Phe-C≡C-Phe-Alkyl 8

Alkyl-Phe-PheX-C≡C-Phe-Alkoxy 9

Alkyl-Cyc-COO-Phe-C≡C-Phe-Alkoxy 10

Alkoxy-Phe-COO-Phe-C≡C-Phe-Halogen 11

Alkyl-Dio-Phe-C≡C-Phe-Alkoxy 12

Alkyl-Cyc-Phe-C≡C-Phe-Phe-Alkoxy 13

Alkyl-Cyc-Phe-C≡C-PheX-Cyc-Alkyl 14

Alkyl-Cyc-COO-Phe-C≡C-Phe-Phe-Alkoxy 15

Alkoxy-Phe-Phe-C≡C-PheX-Phe-Alkyl 16

Alkyl-Cyc-$CH_2CH_2$-Phe-C≡C-Phe-Phe-Alkyl 17

Alkyl-Cyc-$CH_2CH_2$-Phe-C≡C-Phe-Cyc-Alkyl 18

Weiterhin bevorzugt sind Verbindungen der Formel IV,

$R^3$-$(A^1$-$Z^1)_m$-$Q^1$-C≡C-$R^5$ IV

worin $R^5$ eine Alkylgruppe mit 1 bis 15 C-Atomen bedeutet, und $R^3$, $A^1$, $Z^1$, $Q^1$ und m die oben angegebene Bedeutung haben, sowie die oben beschriebenen lateral fluorierten Tolane der Formel VI.

Ebenfalls bevorzugt für Komponente D sind die nachstehend beschriebenen Verbindungen der Formel III mit relativ hoher Doppelbrechung. Besonders bevorzugte erfindungsgemäße Phasen enthalten gleichzeitig Tolan-Verbindungen und Verbindungen der Formel III, wobei die nachstehend beschriebenen lateral fluorierten Terphenylderivate besonders bevorzugt sind.

Der Anteil der Komponente D in der flüssigkristallinen Phase ist normalerweise 10 bis 80, vorzugsweise 20 bis 60 %. Insbesondere bevorzugt sind Anteile von mehr als 50 %.

Für Displays mit aktiver Matrix ist ein hoher Wert für das Verhältnis der elastischen Konstanten $K_3/K_1$ nicht entscheidend, bei passivem Multiplexen jedoch wird Komponente D vorzugsweise derart ausgewählt und in einer solchen Menge zugesetzt, daß in der Phase das Verhältnis der elastischen Konstanten $K_3/K_1$ auf mindestens 1,2, vorzugsweise mindestens 1,4, erhöht wird.

Die einzelnen Komponenten A, B, C und D sowie die Verbindungen der Formeln I bis VI der erfindungsgemäßen Flüssigkristallphasen sind entweder bekannt oder ihre Herstellungsweisen sind für den einschlägigen Fachmann aus dem Stand der Technik ohne weiteres abzuleiten, da sie auf in der Literatur beschriebenen Standardverfahren basieren.

Entsprechende Verbindungen der Formel I werden beispielsweise beschrieben in DE-OS 32 31 707, DE-OS 33 20 024, DE-OS 33 32 691, DE-OS 33 32 692, DE-OS 34 07 013, DE-OS 34 37 935, DE-OS 34 43 929, DE-OS 35 33 333 und DE-OS 36 08 500. Verbindungen der Formel II sind beispielsweise beschrieben in DE-OS 30 42 391, DE-OS 31 17 152, USP 4,490,305, DE-OS 34 10 734, DE-OS 29 33 563, EP-OS 0 084 194, EP-OS 0 117 631 und EP-OS 0 132 377.

Verbindungen der Formeln III bis VI sind teilweise beschrieben in USP 3,925,482, DE-OS 32 46 440, FR 22 34 261-A, JP-OS 280441/86, DE-OS 37 09 167, DE-OS 37 10 069, DE-OS 26 36 684, DE-OS 29 33 563, DE-OS 24 29 093, DE-OS 30 37 303, EP-OS 0 084 194, GB 21 55 465 A, EP-OS 0 058 981, JP-OS 60-155142 und D. Demus et al., Flüssige Kristalle in Tabellen II, VEB Deutscher Verlag für Grundstoffindustrie, Leipzig, 1984.

Die erfindungsgemäßen Phasen enthalten vorzugsweise mindestens 10 % von Verbindungen der Formel I, insbesondere bevorzugt 10 bis 30 % von Verbindungen der Formel I. Vorzugsweise enthalten die erfindungsgemäßen Phasen mindestens eine Verbindung der Formel I, worin A eine in 1- oder 4-Position durch CN substituierte 1,4-Cyclohexylengruppe bedeutet, insbesondere eine Gruppe der Formel

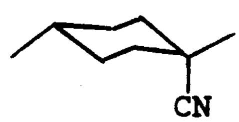

mit einer Nitrilgruppe in axialer Position. $R^1$ und $R^2$ sind vorzugsweise geradkettiges Alkyl oder Alkoxy, insbesondere Alkyl, mit vorzugsweise 2 bis 7 C-Atomen. $A^o$ ist vorzugsweise jeweils unabhängig voneinander trans-1,4-Cyclohexylen, 1,4-Phenylen (unsubstituiert oder durch Fluor substituiert), Pyrimidin-2,5-diyl oder Pyridin-2,5-diyl. $Z^o$ ist vorzugsweise jeweils eine Einfachbindung. p ist vorzugsweise 1 oder 2.

Besonders bevorzugte Verbindungen der Formel I sind diejenigen der Teilformeln Ia bis Ic:

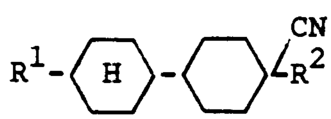

Ia

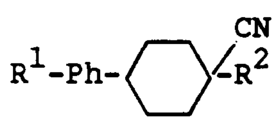

Ib

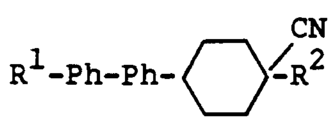

Ic

Besonders bevorzugt sind Verbindungen der Teilformeln Ia und Ic. -Ph-Ph- ist vorzugsweise

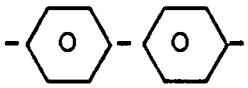, 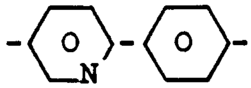, 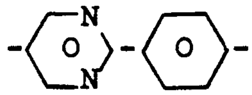, 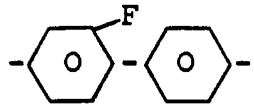

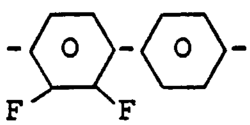, 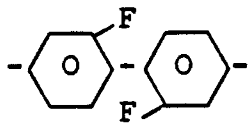, 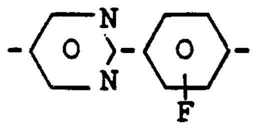 oder 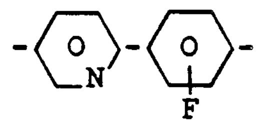

oder das Spiegelbild der unsymmetrischen Gruppen. Bevorzugte erfindungsgemäße Phasen enthalten mindestens eine Verbindung der Formel Ic, insbesondere mindestens eine lateral fluorierte Verbindung der Formel Ic. Ferner bevorzugt sind erfindungsgemäße Phasen enthaltend Verbindungen der Formel Ia und Verbindungen der Formel II.

$R^1$ und $R^2$ sind bevorzugt unabhängig voneinander geradkettiges Alkyl mit 2 bis 7 C-Atomen.

Bevorzugte Phasen enthalten 30 bis 90 %, insbesondere 49 bis 86 % von Verbindungen der Formel II.

A ist vorzugsweise

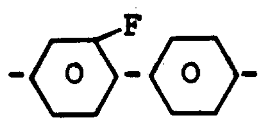

oder

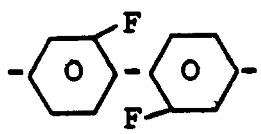 .

$R^3$ und $R^4$ sind vorzugsweise jeweils unabhängig voneinander Alkyl oder Alkoxy mit 1 bis 7 C-Atomen. m ist vorzugsweise 1. $A^1$ und $A^2$ sind vorzugsweise jeweils unabhängig voneinander trans-1,4-Cyclohexylen oder 1,4-Phenylen. $Z^1$ und $Z^2$ sind jeweils unabhängig voneinander vorzugsweise -CO-O-, -O-CO-, -$CH_2CH_2$- oder eine Einfachbindung, insbesondere bevorzugt -$CH_2CH_2$- oder eine Einfachbindung. Besonders bevorzugte Verbindungen der Formel II sind diejenigen der Teilformeln IIc bis IIg:

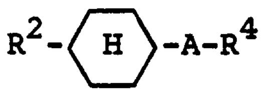

IIa

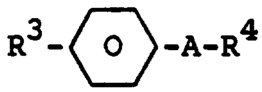

IIb

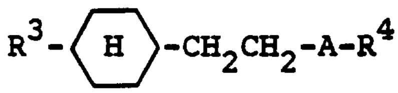

IIb

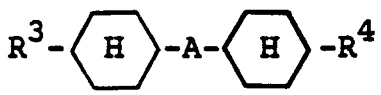

IId

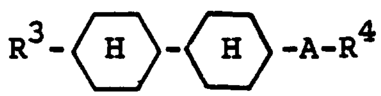

IIe

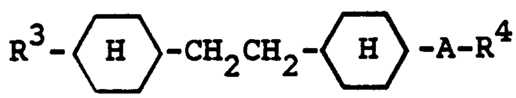

IIf

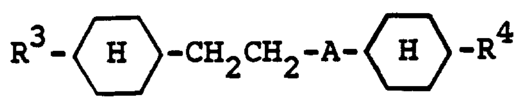

IIg

Besonders bevorzugt sind Verbindungen der Teilformeln IIa, IIb, IIc und IId.

Besonders bevorzugt sind die nematogenen Verbindungen der Formel II mit hoher Doppelbrechung (vorzugsweise $\leqq$ 0,2), worin m vorzugsweise 1, n vorzugsweise 0, $Z^1$ (und $Z^2$) vorzugsweise Einfachhindungen, $A^1$ (und $A^2$) vorzugsweise 1,4-Phenylen oder in 2- oder 3-Position durch Fluor substituiertes 1,4-Phenylen und $R^3$ und $R^4$ jeweils vorzugsweise unabhängig voneinander n-Alkyl oder n-Alkoxy mit 1-10 C-Atomen bedeuten.

Besonders bevorzugt sind die folgenden kleineren Gruppen von Verbindungen der Formel IIb:

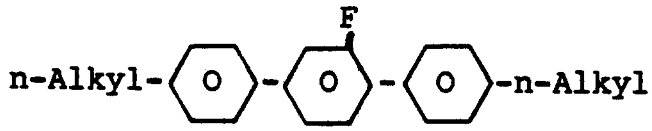

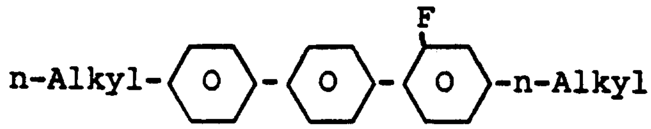

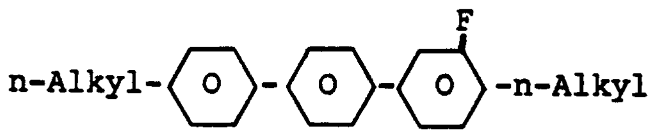

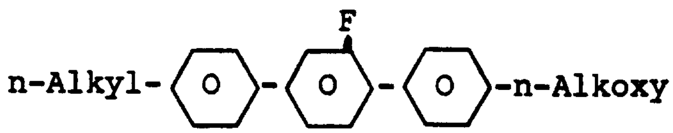

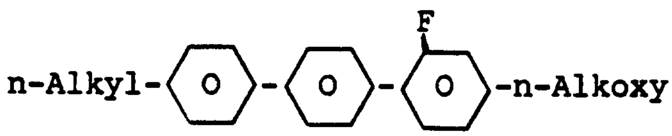

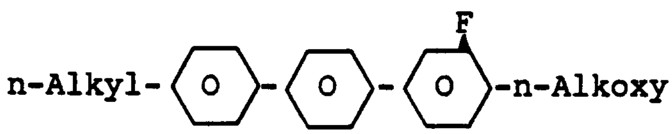

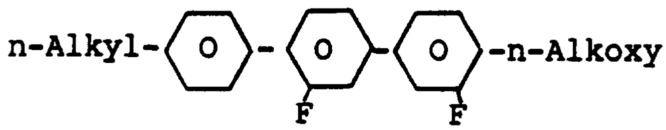

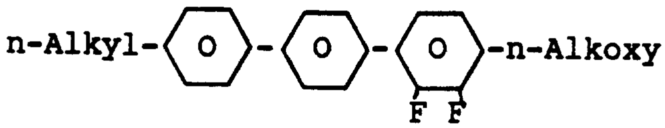

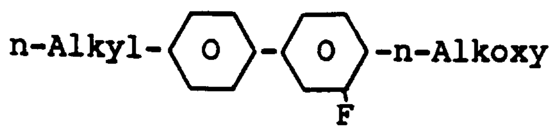

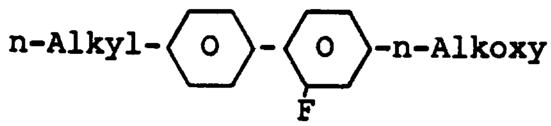

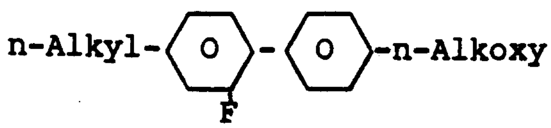

worin n-Alkyl und n-Alkoxy jeweils unabhängig voneinander jeweils vorzugsweise 1 bin 7 C-Atome haben.

Besonders bevorzugte Phasen enthalten ferner noch mindestens eine Komponente der Formel III und/oder IV. $R^3$ ist vorzugsweise geradkettiges Alkyl oder Alkoxy mit jeweils 2 bis 7 C-Atomen. $R^4$ bzw. $R^5$ sind jeweils bevorzugt geradkettiges Alkyl mit 1 bis 7 C-Atomen. $Q^1$ und $Q^2$ sind jeweils unabhängig voneinander vorzugsweise 1,4-Phenylen oder durch Fluor substituiertes 1,4-Phenylen. $A^1$, $A^3$ und $A^4$ sind jeweils unabhängig voneinander vorzugsweise trans-1,4-Cyclohexylen oder 1,4-Phenylen. $Z^1$ und $Z^2$ sind jeweils vorzugsweise Einfachbindungen.

Bevorzugte Komponenten der Formel III sind diejenigen der Teilformeln IIIa bis IIIe,

$R^3-Q^1-C\equiv C-Q^2-R^4$ IIIa

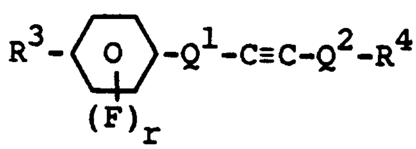
IIIb

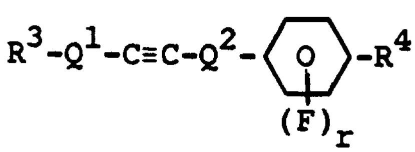
IIIc

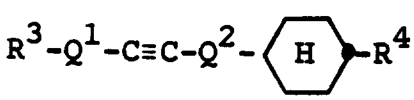
IIId

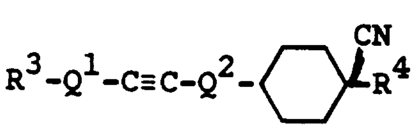
IIIe

worin r o oder 1 bedeutet und $R^3$, $R^4$, $Q^1$ und $Q^2$ die bei Formel III angegebenen bevorzugten Bedeutungen haben.

Besonders bevorzugt sind Komponenten der Formeln IIIa und IIId. $R^3$ ist vorzugsweise Alkyl oder Alkoxy, insbesondere bevorzugt n-Alkoxy. $R^4$ ist vorzugsweise geradkettiges Alkyl.

Die erfindungsgemäßen Flüssigkristallphasen bestehen vorzugsweise aus 2 bis 15, vorzugsweise 3 bis 18 Komponenten. Neben Verbindungen der Formeln I bis IV können auch noch andere Bestandteile zugegen sein, z. B. in einer Menge von bis zu 45 % der Gesamtmischung, vorzugsweise jedoch bis zu 34 %, insbesondere bis zu 10 %.

Die erfindungsgemäßen Phasen enthalten vorzugsweise gleichzeitig Verbindungen der Formel III, worin (o + p) Null oder 1 ist.

Die anderen Bestandteile werden vorzugsweise ausgewählt aus den nematischen oder nematogenen Substanzen, insbesondere den bekannten Substanzen, aus den Klassen der Azoxybenzole, Benzylidenaniline, Biphenyle, Terphenyle, Phenyl- oder Cyclohexylbenzoate, Cyclohexan-carbonsäurephenyl- oder -cyclohexyl-ester, Phenylcyclohexane, Cyclohexylbiphenyle, Cyclohexylcyclohexane, Cyclohexylnaphthaline, 1,4-Bis- oder Cylohexylpyrimidine, Phenyl- oder Cyclohexyldioxane, gegebenenfalls halogenierten Stilbene, Benzylphenylether, Tolane und substituierten Zimtsäuren.

Die wichtigsten als Bestandteile derartiger Flüssigkristallphasen in Frage kommenden Verbindungen lassen sich durch die Formel V charakterisieren,

$R^6$-L-G-E-$R^7$ V

worin L und E je ein carbo- oder heterocyclisches Ringsystem aus der aus 1,4-disubstituierten Benzol- und Cyclohexanringen, 4,4'-disubstituierten Biphenyl-, Phenylcyclohexan und Cyclohexylcyclohexansystemen, 2,5-disubstituierten Pyrimidin- und 1,3-Dioxanringen, 2,6-disubstituierten Naphthalin, Di- und Tetrahydronaphthalin, Chinazolin und Tetrahydrochinazolin gebildeten Gruppe,

| | | |
|---|---|---|
| G | -CH=CH- | -N(O)=N- |
| | -CH=CQ- | -CH=N(O)- |
| | -C≡C- | $-CH_2-CH_2-$ |
| | -CO-O- | $-CH_2-O-$ |
| | -CO-S- | $-CH_2-S-$ |
| | -CH=N- | -COO-Phe-COO- |

oder eine C-C-Einfachbindung, Q Halogen, vorzugsweise Chlor, oder -CN, und $R^6$ und $R^7$ jeweils Alkyl, Alkoxy, Alkanoyloxy oder Alkoxycarbonyloxy mit bis zu 18, vorzugsweise bis zu 8 Kohlenstoffatomen, oder einer dieser Reste auch CN, NC, $NO_2$, $CF_3$, F, Cl oder Br bedeuten.

Bei den meisten dieser Verbindungen sind $R^6$ und $R^7$ voneinander verschieden, wobei einer dieser Reste meist eine Alkyl- oder Alkoxygruppe ist. Auch andere Varianten der vorgesehenen Substituenten sind gebräuchlich. Viele solcher Substanzen oder auch Gemische davon sind im Handel erhältlich. Alle diese Substanzen sind nach literaturbekannten Methoden herstellbar.

Die folgenden Beispiele sollen die Erfindung erläutern, ohne sie zu begrenzen. Vor- und nachstehend bedeuten Prozentangaben Gewichtsprozent; alle Temperaturen sind in Grad Celsius angegeben.

Beispiel 1

Man stellt eine flüssigkristalline Phase her bestehend aus

15 % p-Propylbenzoesäure-(2,2'-difluor-4'-butyloxybiphenyl-4-yl)-ester,
15 % p-Pentylbenzoesäure-(2,2'-difluor-4'-ethoxybiphenyl-4-yl)-ester,
15 % trans-4-Propylcyclohexancarbonsäure-(2,2'-difluor-4'-pentyloxybiphenyl-4-yl)-ester,
15 % trans-4-Butylcyclohexancarbonsäure-(2,2'-difluor-4'-propyloxybiphenyl-4-yl)-ester,
10 % 2,2'-Difluor-4-ethyl-4'-(trans-4-pentylcyclohexyl)-biphenyl,
10 % r-1-Cyan-cis-4-(trans-4-propylcyclohexyl)-1-propylcyclohexan,
10 % 2-Fluor-4-ethyl-(trans-4-propylcyclohexyl)-biphenyl und
10 % trans-1-p-Methoxyphenyl-4-propylcyclohexan.

Beispiel 2

Man stellt eine flüssigkristalline Phase her bestehend aus
7 % r-1-Cyan-cis-4-(trans-4-propylcyclohexyl)-1-propylcyclohexan,
5 % r-1-Cyan-cis-4-(4'-propylbiphenyl-4-yl)-1-propylcyclohexan,
4 % r-1-Cyan-cis-4-(2,2'-difluor-4'-butyloxybiphenyl-4-yl)-1-ethylcyclohexan,
15 % p-Propylbensoesäure-(2,2'-difluor-4'-butyloxybiphenyl-4-yl)-ester,
15 % p-Pentylbenzoesäure-(2,2'-difluor-4'-ethoxybiphenyl 4-yl)-ester,
10 % 2,2'-Difluor-4-ethyl-4'-(trans-4-pentylcyclohexyl)-biphenyl,
10 % 1-(p-Butyloxyphenyl)-2-(2'-fluor-4'-propylbiphenyl-4-yl)-ethin,
10 % trans-1-p-(1-Propinyl)-phenyl-4-propylcyclohexan,
12 % 1-(trans-4-Propylcyclohexyl)-2-(2-fluor-4-ethylbiphenyl-4'-yl)-ethan und
12 % 1-(trans-4-Propylcyclohexyl)-2-(2-fluor-4-pentylbiphenyl-4'-yl)-ethan.

Beispiel 3

Man stellt eine flüssigkristalline Phase her bestehend aus
15 % p-Propylbenzoesäure-(2,2'-difluor-4'-butyloxybiphenyl-4-yl)-ester,
15 % p-Pentylbenzoesäure-(2,2'-difluor-4'-ethoxybiphenyl-4-yl)-ester,
15 % trans-4-Propylcyclohexansäure-(2,2'-difluor-4'-pentyloxybiphenyl-4-yl)-ester,
15 % trans-4-Butylcyclohexansäure-(2,2'-difluor-4'-propyloxybiphenyl-4-yl)-ester,
5 % 2,2'-Difluor-4-ethyl-4'-(trans-4-pentylcyclohexyl)-biphenyl,
5 % r-1-Cyan-cis-4-(4'-propylbiphenyl-4-yl)-1-propylcyclohexan,
10 % r-1-Cyan-cis-4-(trans-4-propylcyclohexyl)-1-propylcyclohexan,
10 % 2-Fluor-4-ethyl-(trans-4-propylcyclohexyl)-biphenyl und
10 % trans-1-p-Methoxyphenyl-4-propylcyclohexan.

Beispiel 4

Eine flüssigkristalline Phase bestehend aus
10 % r-1-Cyan-cis-4-(trans-4-propylcyclohexyl)-1-propylcyclohexan
20 % trans-1-p-Methoxyphenyl-4-propylcyclohexan
17 % trans-1 p-Ethoxyphenyl-4-propylcyclohexan
7 % trans-1-p-Butoxyphenyl-4-propylcyclohexan
3 % 4,4'-Bis(trans-4-propylcyclohexyl)-2-fluorbiphenyl
3 % 4,4'-Bis(trans-4-pentylcyclohexyl)-2-fluorbiphenyl
3 % 4-(trans-4-Pentylcyclohexyl)-4'-(trans-4-propylcyclohexyl)-2-fluorbiphenyl
5 % 4-Butyl-4'-propyltolan
5 % 4-Pentyl-4'-propyltolan
5 % 4-Ethyl-4'-methoxytolan
4 % 4-Methyl-4'-ethoxytolan
6 % 4-(trans-4-Propylcyclohexyl)-4'-methoxytolan
5 % 4-(trans-4-Propylcyclohexyl)-4'-ethoxytolan und
7 % 4-(trans-4-Propylcyclohexyl)-4'-propoxytolan
zeigt einen Klärpunkt von +80°, einen Ubergang smektisch/nematisch < -40°, eine dielektrische Anisotropie von -0,8, eine optische Anisotropie von 0,1581, eine Viskosität von 18 m Pa.S bei 20° und einen Wert $K_3/K_1$ von 1,50.

Beispiel 5

Eine flüssigkristalline Phase bestehend aus
13 % r-1-Cyan-cis-4-(trans-4-propylcyclohexyl)-1-propylcyclohexan
21 % trans-1-p-Methoxyphenyl-4-propylcyclohexan
24 % 1-(trans-4-Propylcyclohexyl)-2-(4'-ethyl-2'-fluorbiphenyl-4-yl)-ethan
4 % 4,4'-Bis(trans-4-propylcyclohexyl)-2-fluorbipnenyl
4 % 4,4'-Bis(trans-4-pentylcyclohexyl)-2-fluorbiphenyl
4 % 4-(trans-4-Pentylcyclohexyl)-4'-(trans-4-propylcyclohexyl)-2-fluorbiphenyl
12 % 4-Pentyl-4'-propyltolan

6 % 4-(trans-4-Propylcyclohexyl)-4'-methoxytolan
5 % 4-(trans-4-Propylcyclohexyl)-4'-ethoxytolan und
7 % 4-(trans-4-Propylcyclohexyl)-4'-propoxytolan
zeigt einen Klärpunkt von +101°, einen Ubergang smektisch/nematisc < -40°, eine dielektrische Anisotropie von -1,0, eine optische Anisotropie von 0,1573, eine Viskosität von 24 m Pa.S bei 20° und ein Verhältnis der elastischen Konstanten $K_3/K_1$ von 1,51 bei 20°.

Beispiel 6

Eine flüssigkristalline Phase bestehend aus
14 % r-1-Cyan-cis-4-(trans-4-butylcyclohexyl)-1-heptylcyclohexan,
14 % r-1-Cyan-cis-4-(trans-4-pentylcyclohexyl)-1-pentylcyclohexan,
20 % trans-1-p-Methoxyphenyl-4-propylcyclohexan,
14 % trans-1-p-Ethoxyphenyl-4-propylcyclohexan,
8 % trans-1-p-Butoxyphenyl-4-propylcyclohexan,
4 % 4,4'-Bis-(trans-4-propylcyclohexyl)-2-fluorbiphenyl,
4 % 4,4'-Bis-(trans-4-pentylcyclohexyl)-2-fluorbiphenyl,
6 % 4-(trans-4-Pentylcyclohexyl)-4'-(trans-4-propylcyclohexyl)-2-fluorbiphenyl,
4 % 4-Methyl-4'-ethoxytolan,
2 % 4-Ethyl-4'-methoxytolan,
4 % 4-(trans-4-Propylcyclohexyl)-4'-methoxytolan,
4 % 4-(trans-4-Propylcyclohexyl)-4'-ethoxytolan und
2 % 4-(trans-4-Propylcyclohexyl)-4'-propoxytolan
zeigt einen Klärpunkt von 80 °, eine optische Anisotropie von 0,1116 und eine Viskosität von 26 mPa.s bei 20 °.

Beispiel 7

Man stellt eine flüssigkristalline Phase her bestehend aus
15 % p-Propylbenzoesäure-(4-butoxy-2'2'-difluorbiphenyl-4-yl)-ester
15 % p-Pentylbenzoesäure-(4-ethoxy-2,2'-difluorbiphenyl-4-yl)-ester
15 % trans-4-Propylcyclohexancarbonsäure-(4-pentoxy-2,2'-difluorbiphenyl-4-yl)-ester
15 % trans-4-Butylcyclohexancarbonsäure-(4-propoxy-2,2'-difluorbiphenyl-4-yl)-ester
10 % 4-Ethyl-2,2'-difluor-4'-(trans-4-pentylcyclohexyl)biphenyl
10 % r-1-Cyan-cis-4-(trans-4-propylcyclohexyl)-1-propylcyclohexan
10 % 4-Ethyl-2'-fluor-4'-(trans-4-propylcyclohexyl)biphenyl und
10 % trans-1-p-Methoxyphenyl-4-propylcyclohexan.

Beispiel 8

Man stellt eine flüssigkristalline Phase her bestehend aus
10 % r-1-Cyan-cis-4-(trans-4-propylcyclohexyl)-1-propylcyclohexan
4 % 4-(4-Cyan-4-propylcyclohexyl)-4'-butoxytolan
4 % 4-(4-Cyan-4-butylcyclohexyl)-4'-(4-pentylcyclohexyl)-2-fluor-tolan
25 % 1-(trans-4-Propylcyclohexyl)-2-(4'-ethyl-2'-fluorbiphenyl-4-yl)-ethan
25 % 1-(trans-4-Propylcyclohexyl)-2-(4'-pentyl-2'-fluorbiphenyl-4-yl)-ethan
15 % 1-(trans-4-Pentylcyclohexyl)-2-(4'-ethyl-2'-fluorbiphenyl-4-yl)-ethan
10 % 4-Ethyl-2,2'-difluor-4'-(trans-4-pentylcyclohexyl)biphenyl und
7 % 4-Pentyl-4'-butoxytolan.

Beispiel 9

Man stellt eine flüssigkristalline Phase her bestehend aus
6 % r-1-Cyan-cis-4-(trans-4-propylcyclohexyl)-1-propylcyclohexan
4 % 4-(4-Cyan-4-propylcyclohexyl)-4'-butoxytolan
4 % 4-(4-Cyan-4-butylcyclohexyl)-4'-(4-pentylcyclohexyl)-2-fluor-tolan
20 % 1-(trans-4-Propylcyclohexyl)-2-(4'-ethyl-2'-fluorbiphenyl-4-yl)-ethan
20 % 1-(trans-4-Propylcyclohexyl)-2-(4'-pentyl-2'-fluorbiphenyl-4-yl)-ethan

20 % 1-(trans-4-Pentylcyclohexyl)-2-(4'-ethyl-2'-fluorbiphenyl-4-yl)-ethan
8 % 4-(4-Propyl-2-fluorphenyl)-4'-pentoxy-2-fluortolan
8 % 4-Ethyl-2,2'-difluor-4'-(trans-4-pentylcyclohexyl)biphenyl und
10 % 4-Pentyl-4'-butoxytolan.

Beispiel 10

Eine flüssigkristalline Phase bestehend aus
5 % trans-4-(trans-4-Propylcyclohexyl)-cyclohexancarbonsäure-(2,3-dicyan-4-ethoxyphenylester),
5 % trans-4-(trans-4-Butylcyclohexyl)-cyclohexancarbonsäure-(2,3-dicyan-4-ethoxyphenylester),
20 % trans-1-p-Methoxyphenyl-4-propylcyclohexan,
17 % trans-1-p-Ethoxyphenyl-4-propylcylcohexan,
7 % trans-1-p-Butoxyphenyl-4-propylcyclohexan,
3 % 4,4'-Bis-(trans-4-propylcyclohexyl)-2-fluorbiphenyl,
3 % 4,4'-Bis-(trans-4-pentylcyclohexyl)-2-fluorbiphenyl,
3 % 4-(trans-4-Pentylcyclohexyl)-4'-(trans-4-propylcyclohexyl)-2-fluorbiphenyl,
5 % 4-Butyl-4'-propyltolan,
5 % 4-Pentyl-4'-propyltolan,
5 % 4-Methyl-4'-ethoxytolan,
4 % 4-Ethyl-4'-methoxytolan,
6 % 4-(trans-4-Propylcyclohexyl)-4'-methoxytolan,
5 % 4-(trans-4-Propylcyclohexyl)-4'-ethoxytolan und
7 % 4-(trans-4-Propylcyclohexyl)-4'-propoxytolan
zeigt einen Klärpunkt von 91°.

Beispiel 11

Eine flüssigkristalline Phase bestehend aus
10 % 2,3-Dicyan-1,4-diheptanoyloxy-benzol,
20 % trans-1-p-Methoxyphenyl-4-propylcyclohexan,
17 % trans-1-p-Ethoxyphenyl-4-propylcyclohexan,
7 % trans-1-p-Butoxyphenyl-4-propylcyclohexan,
3 % 4,4'-Bis-(trans-4-propylcyclohexyl)-2-fluorbiphenyl,
3 % 4,4'-Bis-(trans-4-pentylcyclohexyl)-2-fluorbiphenyl,
3 % 4-(trans-4-Pentylcyclohexyl)-4'-(trans-4-propylcyclohexyl)-2-fluorbiphenyl,
5 % 4-Butyl-4'-propyltolan,
5 % 4-Pentyl-4'-propyltolan,
5 % 4-Methyl-4'-ethoxytolan,
4 % 4-Ethyl-4'-methoxytolan,
6 % 4-(trans-4-Propylcyclohexyl)-4'-methoxytolan,
5 % 4-(trans-4-Propylcyclohexyl)-4'-ethoxytolan und
7 % 4-(trans-4-Propylcyclohexyl)-4'-propoxytolan
zeigt einen Klärpunkt von 95°.

Beispiel 12

Man stellt eine flüssigkristalline Phase her bestehend aus
7 % p-(p-Pentylphenyl)-benzoesäure-(2,3-dicyan-4-propoxyphenylester),
3 % p-Propylbenzoesäure-(2,3-dicyan-4-ethoxyphenylester),
20 % trans-1-p-Methoxyphenyl-4-propylcyclohexan,
17 % trans-1-p-Ethoxyphenyl-4-propylcyclohexan,
7 % trans-1-p-Butoxyphenyl-4-propylcyclohexan,
3 % 4,4'-Bis-(trans-4-propylcyclohexyl)-2-fluorbiphenyl,
3 % 4,4'-Bis-(trans-4-pentylcyclohexyl)-2-fluorbiphenyl,
3 % 4-(trans-4-Pentylcyclohexyl)-4'-(trans-4-propylcyclohexyl)-2-fluorbiphenyl,
5 % 4-Butyl-4'-propyltolan,
5 % 4-Pentyl-4'-propyltolan,
5 % 4-Methyl-4'-ethoxytolan,

4 % 4-Ethyl-4'-methoxytolan,
6 % 4-(trans-4-Propylcyclohexyl)-4'-methoxytolan,
5 % 4-(trans-4-Propylcyclohexyl)-4'-ethoxytolan und
7 % 4-(trans-4-Propylcyclohexyl)-4'-propoxytolan.

Beispiel 13

Man stellt eine flüssigkristalline Phase her bestehend aus
7 % 1-(2,3-Dicyan-4-pentylphenyl)-2-(4'-pentylbiphenyl-4-yl)-ethan,
3 % 2,3-Dicyan-1,4-bis-(4',4''-pentylphenyl)-benzol,
20 % trans-1-p-Methoxyphenyl-4-propylcyclohexan,
17 % trans-1-p-Ethoxyphenyl-4-propylcyclohexan,
7 % trans-1-p-Butoxyphenyl-4-propylcyclohexan,
3 % 4,4'-Bis-(trans-4-propylcyclohexyl)-2-fluorbiphenyl,
3 % 4,4'-Bis-(trans-4-pentylcyclohexyl)-2-fluorbiphenyl,
3 % 4-(trans-4-Pentylcyclohexyl)-4'-(trans-4-propylcyclohexyl)-2-fluorbiphenyl,
5 % 4-Butyl-4'-propyltolan,
5 % 4-Pentyl-4'-propyltolan,
5 % 4-Methyl-4'-ethoxytolan,
4 % 4-Ethyl-4'-methoxytolan,
6 % 4-(trans-4-Propylcyclohexyl)-4'-methoxytolan,
5 % 4-(trans-4-Propylcyclohexyl)-4'-ethoxytolan und
7 % 4-(trans-4-Propylcyclohexyl)-4'-propoxytolan.

Beispiel 14

Eine flüssigkristalline Phase bestehend aus
9 % r-1-Cyan-cis-4-(trans-4-propylcyclohexyl)-1-propylcyclohexan,
5 % r-1-Cyan-cis-4-(4'-propylbiphenyl-4-yl)-1-propylcyclohexan,
26 % 1-(trans-4-Propylcyclohexyl)-2-(2-fluor-4-pentylbiphenyl-4'-yl)-ethan,
23 % 1-(trans-4-Propylcyclohexyl)-2-(2-fluor-4-ethylbiphenyl-4'-yl)-ethan,
23 % 1-(trans-4-Pentylcyclohexyl)-2-(2-fluor-4-ethylbiphenyl-4'-yl)-ethan,
5 % 4,4-Bis-(trans-4-propylcyclohexyl)-2-fluorbiphenyl und
7 % 1-[p-(trans-4-Propylcyclohexyl)-phenyl]-2-(5-methylpyridin-2-yl)-acetylen
zeigt einen Klärpunkt von 109°, eine dielektrische Anisotropie von -1,1, eine optische Anisotropie von 0,147 und eine Viskosität von 35 mPa.s bei 20°.

Beispiel 15

Man stellt eine flüssigkristalline her Phase bestehend aus
10 % r-1-Cyan-cis-4-(trans-4-propylcyclohexyl)-1-propylcyclohexan
20 % trans-1-p-Methoxyphenyl-4-propylcyclohexan
17 % trans-1-p-Ethoxyphenyl-4-propylcyclohexan
7 % trans-1-p-Butoxyphenyl-4-propylcyclohexan
3 % 4,4'-Bis(trans-4-propylcyclohexyl)-2-fluorbiphenyl
3 % 4,4'-Bis(trans-4-pentylcyclohexyl)-2-fluorbiphenyl
3 % 4-(trans-4-Pentylcyclohexyl)-4'-(trans-4-propylcyclohexyl)-2-fluorbiphenyl
5 % 4-Butyl-4'-propyltolan
5 % 4-Pentyl-4'-propyltolan
5 % 4-Ethyl-4'-methoxytolan
4 % 4-Methyl-4'-ethoxytolan
6 % 4-(trans-4-Propylcyclohexylethyl)-4'-methoxytolan
5 % 4-(trans-4-Propylcyclohexylethyl)-4'-ethoxytolan und
7 % 4-(trans-4-Propylcyclohexylethyl)-4'-propoxytolan.

Beispiel 16

Man stellt eine flüssigkristalline her Phase bestehend aus
10 % r-1-Cyan-cis-4-(trans-4-propylcyclohexyl)-1-propylcyclohexan
20 % trans-1-p-Methoxyphenyl-4-propylcyclohexan
17 % trans-1-p-Ethoxyphenyl-4-propylcyclohexan
7 % trans-1-p-Butoxyphenyl-4-propylcyclohexan
3 % 4,4'-Bis(trans-4-propylcyclohexyl)-2-fluorbiphenyl
3 % 4,4'-Bis(trans-4-pentylcyclohexyl)-2-fluorbiphenyl
3 % 4-(trans-4-Pentylcyclohexyl)-4'-(trans-4-propylcyclohexyl)-2-fluorbiphenyl
5 % 4-Butyl-4'-propyltolan
5 % 4-Pentyl-4'-propyltolan
5 % 4-Ethyl-4'-methoxytolan
4 % 4-Methyl-4'-ethoxytolan
6 % 4-(trans-4-Propylcyclohexyl)-3'-fluor-4'-methoxytolan
5 % 4-(trans-4-Propylcyclohexyl)-4'-ethoxytolan und
7 % 4-(trans-4-Propylcyclohexyl)-4'-propoxytolan.

Beispiel 17

Man stellt eine flüssigkristalline Phase her bestehend aus
10 % r-1-Cyan-cis-4-(trans-4-propylcyclohexyl)-1-propylcyclohexan
20 % trans-1-p-Methoxyphenyl-4-propylcyclohexan
17 % trans-1-p-Ethoxyphenyl-4-propylcyclohexan
7 % trans-1-p-Butoxyphenyl-4-propylcyclohexan
3 % 4,4'-Bis(trans-4-propylcyclohexyl)-2-fluorbiphenyl
3 % 4,4'-Bis(trans-4-pentylcyclohexyl)-2-fluorbiphenyl
3 % 4-(trans-4-Pentylcyclohexyl)-4'-(trans-4-propylcyclohexyl)-2-fluorbiphenyl
5 % 4-Butyl-4'-propyltolan
5 % 4-Pentyl-4'-propyltolan
5 % 4-Ethyl-4'-methoxytolan
4 % 4-Methyl-4'-ethoxytolan
6 % 4-(trans-4-Propylcyclohexyl)-2-fluor-4'-methoxytolan
5 % 4-(trans-4-Propylcyclohexyl)-4'-ethoxytolan und
7 % 4-(trans-4-Propylcyclohexyl)-4'-propoxytolan.

Beispiel 18

Man stellt eine flüssigkristalline Phase her bestehend aus
10 % r-1-Cyan-cis-4-(trans-4-propylcyclohexyl)-1-propylcyclohexan
20 % trans-1-p-Methoxyphenyl-4-propylcyclohexan
17 % trans-1-p-Ethoxyphenyl-4-propylcyclohexan
7 % trans-1-p-Butoxyphenyl-4-propylcyclohexan
3 % 4,4'-Bis(trans-4-propylcyclohexyl)-2-fluorbiphenyl
3 % 4,4'-Bis(trans-4-pentylcyclohexyl)-2-fluorbiphenyl
3 % 4-(trans-4-Pentylcyclohexyl)-4'-(trans-4-propylcyclohexyl)-2-fluorbiphenyl
5 % 4-Butyl-4'-propyltolan
5 % 4-pentyl-4'-propyltolan
5 % 4-Ethyl-4'-methoxytolan
4 % 4-Methyl-4'-ethoxytolan
6 % 4-(p-Propylphenyl)-3'-fluor-4'-methoxytolan
5 % 4-(p-Propylphenyl)--3'-fluor-4'-ethoxytolan und
7 % 4-(p-Propylphenyl)-4'-propoxytolan.

Beispie1 19

Eine flüssigkristalline Phase bestehend aus
13 % r-1-Cyan-cis-4-(trans-4-Propylcyclohexyl)-1-propylcyclohexan,

18 % 1-(trans-4-Propylcyclohexyl)-2-(4'-ethyl-2'-fluorbiphenyl-4-yl)-ethan,
18 % 1-(trans-4-Propylcyclohexyl)-2-(4'-pentyl-2'-fluorbiphenyl-4-yl)-ethan,
4 % 4,4'-Bis-(trans-4-propylcyclohexyl)-biphenyl,
6 % 4,4'-Bis-(trans-4-propylcyclohexyl)-2-fluorbiphenyl,
5 % 4,4'-Bis-(trans-4-pentylcyclohexyl)-biphenyl,
6 % 4-(trans-4-Pentylcyclohexyl)-4'-(trans-4-propylcyclohexyl)-2-fluorbiphenyl,
10 % 4-Pentyl-4'-propyltolan,
10 % 4-Butyl-4'-propyltolan und
10 % 4-Butyl-4'-pentyltolan
zeigt einen Klärpunkt von 97°, eine optische Anisotropie von 0,16 und eine Viskosität von 28 mPa.s bei 20°.

Beispiel 20

Eine flüssigkristalline Phase bestehend aus
13 % r-1-Cyan-cis-4-(trans-4-propylcyclohexyl)-1-propylcyclohexan,
21 % trans-1-p-Methoxyphenyl-4-propylcyclohexan,
24 % 1-(trans-4-Propylcyclohexyl)-2-(4'-ethyl-2'-fluorbiphenyl-4-yl)-ethan,
4 % 4,4'-Bis-(trans-4-propylcyclohexyl)-2-fluorbiphenyl,
4 % 4,4'-Bis-(trans-4-pentylcyclohexyl)-2-fluorbiphenyl,
4 % 4-(trans-4-Pentylcyclohexyl)-4'-(trans-4-propylcyclohexyl)-2-fluorbiphenyl,
12 % 4-Pentyl-4'-propyltolan,
6 % 4-(trans-4-Propylcyclohexyl)4'-methoxytolan,
5 % 4-(trans-4-Propylcyclohexyl)4'-ethoxytolan und
7 % 4-(trans-4-Propylcyclohexyl)4'-propoxytolan
zeigt einen Klärpunkt von 101°, eine optische Anisotropie von 0,15 und eine Viskosität von 24 mPa.s bei 20°.

Beispiel 21

Eine flüssigkristalline Phase bestehend aus
15 % 4-(4-Cyan-4-pentylcyclohexyl)-4'-heptyloxytolan,
21 % trans-1-p-Methoxyphenyl-4-propylcyclohexan,
7 % trans-1-p-Ethoxyphenyl-4-propylcyclohexan,
21 % 1-(trans-4-Propylcyclohexyl)-2-(4'ethyl-2'-fluorbiphenyl-4-yl)-ethan,
5 % 4,4'-Bis-(trans-4-propylcyclohexyl)-2-fluorbiphenyl,
5 % 4,4'-Bis-(trans-4-pentylcyclohexyl)-2-fluorbiphenyl,
5 % 4-(trans-4-Pentylcyclohexyl)-4'-(trans-4-propylcyclohexyl)-2-fluorbiphenyl,
7 % 4-Butyl-4'-ethoxytolan,
7 % 4-Pentyl-4'-methoxytolan und
7 % 4-Pentyl-4'-ethoxytolan
zeigt einen Klärpunkt von 102°, eine optische Anisotropie von 0,17 und eine Viskosität von 29 mPas.s bei 20°.

Beispiel 22

Eine flüssigkristalline Phase bestehend aus
13 % r-1-Cyan-cis-4(trans-4-propylcyclohexyl)-1-propylcyclohexan,
19 % 1-(trans-4-Propylcyclohexyl)-2-(4'-ethyl-2'-fluor-biphenyl-4-yl)-ethan,
19 % 1-(trans-4-Propylcyclohexyl)-2-(4'-pentyl-2'-fluor-biphenyl-4-yl)-ethan,
16 % 1-(trans-4-Pentylcyclohexyl)-2-(4'-ethyl-2'-fluor-biphenyl-4-yl)-ethan,
5 % 4,4'-Bis-(trans-4-propylcyclohexyl)-2-fluorbiphenyl,
7 % 4-Butyl-4'-ethoxytolan,
7 % 4-Pentyl-4'-methoxytolan,
7 % 4-Pentyl-4'-ethoxytolan und
7 % 4-(trans-4-Propylcyclohexyl)-4'-methoxytolan
ieigt einen Klärpunkt von 99°, eine optische Ansotropie von 0,17 und eine Viskosität von 29 mPa.s bei 20°.

Beispiel 23

Eine flüssigkristalline Phase bestehend aus
12 % r-1-Cyan-cis-4-(trans-4-propylcyclohexyl)-1-propylcyclohexan,
21 % trans-1-p-Methoxyphenyl-4-propylcyclohexan,
21 % 1-(trans-4-Propylcyclohexyl)-2-(4'-ethyl-2'-fluor-biphenyl-4-yl)-ethan,
6 % 4,4'-Bis-(trans-4-propylcyclohexyl)-2-fluorbiphenyl,
6 % 4,4'-Bis-(trans-4-pentylcyclohexyl)-2-fluorbiphenyl,
6 % 4-(trans-4-Pentylcyclohexyl)-4'-(trans-4-propylcyclohexyl)-2-fluorbiphenyl,
7 % 4-Butyl-4'-ethoxytolan,
7 % 4-Pentyl-4'-methoxytolan,
7 % 4-Pentyl-4'-ethoxytolan und
7 % 4-(trans-4-Propylcyclohexyl)-4'-methoxytolan
zeigt einen Klärpunkt von 98°, eine optische Anisotropie von 0,16 und eine Viskosität von 24 mPa.s bei 20°.

Beispiel 24

Eine flüssigkristalline Phase bestehend aus
13 % r-1-Cyan-cis-4-(trans-4-propylcyclohexyl)-1-propylcyclohexan,
22 % trans-1-p-Methoxyphenyl-4-propylcyclohexan,
26 % 1-(trans-4-Propylcyclohexyl)-2-(4'-ethyl-2'-fluor-biphenyl-4-yl)-ethan,
6 % 4,4'-Bis-(trans-4-propylcyclohexyl)-2-fluorbiphenyl,
6 % 4,4'-Bis-(trans-4-pentylcyclohexyl)-2-fluorbiphenyl,
6 % 4-(trans-4-Pentylcyclohexyl)-4'-(trans-4-propylcyclohexyl)-2-fluorbiphenyl,
5 % 4-Butyl-4'-ethoxytolan,
5 % 4-Pentyl-4'-methoxytolan,
4 % 4-Pentyl-4'-ethoxytolan und
7 % 4-(trans-4-Propylcyclohexyl)-4'-methoxytolan
zeigt einen Klärpunkt von 99°, eine optische Anisotropie von 0,15 und eine Viskosität von 24 mPa.s bei 20°.

Beispiel 25

Eine flüssigkristalline Phase bestehend aus
14 % r-1-Cyan-cis-4-(trans-4-propylcyclohexyl)-1-propylcyclohexan,
20 % 1-(trans-4-Propylcyclohexyl)-2-(4'-ethyl-2'-fluor-biphenyl-4-yl)-ethan,
19 % 1-(trans-4-Propylcyclohexyl)-2-(4'-pentyl-2'-fluor-biphenyl-4-yl)-ethan,
17 % 1-(trans-4-Pentylcyclohexyl)-2-(4'-ethyl-2'-fluor-biphenyl-4-yl)-ethan,
4 % 4,4'-Bis-(trans-4-propylcyclohexyl)-2-fluorbiphenyl,
5 % 4-(trans-4-Pentylcyclohexyl)-4'-(trans-4-propylcyclohexyl)-2-fluorbiphenyl,
7 % 4-Butyl-4'-ethoxytolan,
7 % 4-Pentyl-4'-methoxytolan und
7 % 4-Pentyl-4'-ethoxytolan
zeigt einen Klärpunkt von 95°, eine optische Anisotropie von 0,16 und eine Viskosität von 28 mPa.s bei 20°.

Beispiel 26

Man stelle eine flüssigkristalline Phase her bestehend aus
10 % r-1-Cyan-cis-4-(trans-4-propylcyclohexyl)-1-propylcyclohexan
20 % trans-1-p-Methoxyphenyl-4-propylcyclohexan
17 % trans-1-p-Ethoxyphenyl-4-propylcyclohexan
7 % trans-1-p-Butoxyphenyl-4-propylcyclohexan
3 % 4,4'-Bis(trans-4-propylcyclohexyl)-2-fluorbiphenyl
3 % 4,4'-Bis(trans-4-pentylcyclohexyl)-2-fluorbiphenyl
3 % 4-(trans-4-Pentylcyclohexyl)-4'-(trans-4-propylcyclohexyl)-2-fluorbiphenyl
5 % 4-Butyl-4'-propyltolan

5 % 4-Pentyl-4'-propyltolan
5 % 4-Ethyl-4'-methoxytolan
4 % 4-Pentyl-3'⁻fluor-4'-methoxytolan
6 % 4-(trans-4-Propylcyclohexyl)-4'-methoxytolan
5 % 4-(trans-4-Propylcyclohexyl)-4'-ethoxytolan und
7 % 4-(trans-4-Propylcyclohexyl)-4'-propoxytolan.

Beispiel 27

Eine flüssigkristalline Phase bestehend aus
30 % 4-Pentyl-3'-fluor-4'-methoxytolan,
20 % 4-Butyl-3'-fluor-4'-ethoxytolan,
15 % 4-Pentyl-3'-fluor-4'-ethoxytolan,
20 % trans-1-p-Methoxyphenyl-4-propylcyclohexan,
5 % 4,4'-Bis-(trans-4-propylcyclohexyl)-2-fluorbiphenyl,
5% 4,4'-Bis-(trans-4-pentylcyclohexyl)-2-fluorbiphenyl, und
5 % 4-(trans-4-Pentylcyclohexyl)-4'-(trans-4-propylcyclohexyl)-2-fluorbiphenyl
zeigt eine dielektrische Anisotropie von -0,9.

Beispiel 28

Eine flüssigkristalline Phase bestehend aus
10 % r-1-Cyan-cis-4-(trans-4-propylcyclohexyl)-1-propylcyclohexan,
25 % 4-Propyl-3'-fluor-4'-methoxytolan,
15 % 4-Butyl-3'-fluor-4'-methoxytolan,
15 % 4-Pentyl-3'-fluor-4'-methoxytolan,
20 % trans-1-p-Methoxyphenyl-4-propylcyclohexan,
5 % 4,4'-Bis-(trans-4-propylcyclohexyl)-2-fluorbiphenyl,
5% 4,4'-Bis-(trans-4-pentylcyclohexyl)-2-fluorbiphenyl, und
5 % 4-(trans-4-Pentylcyclohexyl)-4'-(trans-4-propylcyclohexyl)-2-fluorbiphenyl
zeigt eine dielektrische Anisotropie von -1,8.

Beispiel 29

Eine flüssigkristalline Phase bestehend aus
14 % r-Cyan-cis-4-(trans-4-propylcyclohexyl)-1-propylcyclohexan,
20 % 1-(trans-4-Propylcyclohexyl)-2-(4'-ethyl-2'-fluorbiphenyl-4-yl)-ethan,
13 % 1-(trans-4-Propylcyclohexyl)-2-(4'-pentyl-2'-fluorbiphenyl-4-yl)-ethan,
17 % 1-(trans-4-Pentylcyclohexyl)-2-(4'-ethyl-2'-fluorbiphenyl-4-yl)-ethan,
4 % 4,4'-Bis-(trans-4-propylcyclohexyl)-2-fluorbiphenyl,
5 % 4-(trans-4-Pentylcyclohexyl)-4'-(trans-4-propylcyclohexyl)-2-fluorbiphenyl,
7 % 4-Butyl-4'-ethoxytolan,
7 % 4-Pentyl-4'-methoxytolan und
7 % 2'-Fluor-4-pentyl-4'-(p-ethoxyphenyl)-biphenyl
Zeigt einen Klärpunkt von 98°, eine dielektrische Anisotropie von -1,3 und eine optische Anisotropie von 0,162.

Beispiel 30

Eine flüssigkristallIne Phase bestehend aus
12 % r-1-Cyan-cis-4-(trans-4-propylcyclohexyl)-1-propylcyclohexan,
21 % trans-1-p-Methoxphenyl-4-propylcyclohexan,
24 % 1-(trans-4-Propylcyclohexyl)-2-(4'-ethyl-2'-fluorbiphenyl-4-yl)-ethan,
4 % 4,4'-Bis-(trans-4-propylcyclohexyl)-2-fluorbiphenyl,
4 % 4,4'-Bis-(trans-4-pentylcyclohexyl)-2-fluorbiphenyl,
5 % 4-(trans-4-Pentylcyclohexyl)-4'-(trans-4-propylcyclohexyl)-2-fluorbiphenyl,
10 % 2'-Fluor-4-propyl-4'-(p-propylphenyl)-biphenyl,
10 % 2'-Fluor-4-pentyl-4'-(p-propylphenyl)-biphenyl und

10 % 2'-Fluor-4-heptyl-4'-(p-propylphenyl)-biphenyl
Zeigt einen Klärpunkt von 88°, eine dielektrische Anisotropie von -1,1 und eine optische Anisotropie von 0,132.

Beispiel 31

Man stellt eine flüssigkristalline Phase her bestehend aus
5 % 4-(p-Pentylphenyl)-3-fluor-4'-propyltolan,
25 % 4-Pentyl-3'-fluor-4'-methoxytolan,
20 % 4-Butyl-3'-fluor-4'-ethoxytolan,
15 % 4-Pentyl-3'-fluor-4'-ethoxytolan,
20 % trans-1-p-Methoxyphenyl-4-propylcyclohexan,
5 % 4,4'-Bis-(trans-4-propylcyclohexyl)-2-fluorbiphenyl,
5 % 4,4'-Bis-(trans-4-pentylcyclohexyl)-2-fluorbiphenyl, und
5 % 4-(trans-4-Pentylcyclohexyl)-4'-(trans-4-propylcyclohexyl)-2-fluorbiphenyl.

Beispiel 32

Man stellt eine flüssigkristalline Phase her bestehend aus
10 % r-1-Cyan-cis-4-(trans-4-propylcyclohexyl)-1-propylcyclohexan,
20 % trans-1-p-Methoxphenyl-4-propylcyclohexan,
17 % trans-1-p-Ethoxyphenyl-4-propylcyclohexan,
7 % trans-1-p-Butoxyphenyl-4-propylcyclohexan,
3 % 4,4'-Bis(trans-4-propylcyclohexyl)-2-fluorbiphenyl,
3 % 4,4'-Bis(trans-4-pentylcyclohexyl)-2-fluorbiphenyl,
3 % 4-(trans-4-Pentylcyclohexyl)-4'-(trans-4-propylcyclohexyl)-2-fluorbiphenyl,
5 % 4-Butyl-4'-propyltolan,
5 % 4-Pentyl-4'-propyltolan,
5 % 4-Ethyl-4'-methoxytolan,
4 % 4-Methyl-4'-ethoxytolan,
6 % 4-(p-Pentylphenyl)-3,3'-difluor-4'-methoxytolan,
5 % 4-(trans-4-Propylcyclohexyl)-4'-ethoxytolan und
7 % 4-(trans-4-Propylcyclohexyl)-4'-propoxytolan.

Beispiel 33

Man stellt eine flüssigkristalline Phase her bestehend aus
5 % 4-(trans-4-Propylcyclohexyl)-2',3'-difluor-4' - propoxytolan,
25 % 4-Pentyl-3'-fluor-4'-methoxytolan,
20 % 4-Butyl-3'-fluor-4'-ethoxytolan,
15 % 4-Pentyl-3'-fluor-4'-ethoxytolan,
20 % trans-1-p-Methoxyphenyl-4-propylcyclohexan,
5 % 4,4'-Bis-(trans-4-propylcyclohexyl)-2-fluorbiphenyl,
5 % 4,4'-Bis-(trans-4-pentylcyclohexyl)-2-fluorbiphenyl, und
5 % 4-(trans-4-Pentylcyclohexyl)-4'-(trans-4-propylcyclohexyl)-2-fluorbiphenyl.

Beispiel 34

Man stellt eine flüssigkristalline Phase her bestehend aus
10 % r-1-Cyan-cis-4-(trans-4-propylcyclohexyl)-1-propylcyclohexan,
20 % trans-1-p-Methoxphenyl-4-propylcyclohexan,
17 % trans-1-p-Ethoxyphenyl-4-propylcyclohexan,
7 % trans-1-p-Butoxyphenyl-4-propylcyclohexan,
3 % 4,4'-Bis(trans-4-propylcyclohexyl)-2-fluorbiphenyl,
3 % 4,4'-Bis(trans-4-pentylcyclohexyl)-2-fluorbiphenyl,
3 % 4-(trans-4-Pentylcyclohexyl)-4'-(trans-4-propylcyclohexyl)-2-fluorbiphenyl,
5 % 4-Butyl-4'-propyltolan,
5 % 4-Pentyl-4'-propyltolan,

5 % 4-Ethyl-4'-methoxytolan,
4 % 4-Methyl-4'-ethoxytolan,
6 % 3-Fluor-4-ethoxy-4'-(p-pentylphenyl)-biphenyl,
5 % 4-(trans-4-Propylcyclohexyl)-4'-ethoxytolan und
7 % 4-(trans-4-Propylcyclohexyl)-4'-propoxytolan.

Beispiel 35

Man stellt eine flüssigkristalline Phase her bestehend aus
5 % 3,3'-Difluor-4-ethoxy-4'-(p-propylphenyl)-biphenyl,
25 % 4-Pentyl-3'-fluor-4'-methoxytolan,
20 % 4-Butyl-3'-fluor-4'-ethoxytolan,
15 % 4-Pentyl-3'-fluor-4'-ethoxytolan,
20 % trans-1-p-Methoxyphenyl-4-propylcyclohexan,
5 % 4,4'-Bis-(trans-4-propylcyclohexyl)-2-fluorbiphenyl,
5 % 4,4'-Bis-(trans-4-pentylcyclohexyl)-2-fluorbiphenyl, und
5 % 4-(trans-4-Pentylcyclohexyl)-4'-(trans-4-propylcyclohexyl)-2-fluorbiphenyl.

Beispiel 36

Man stellt eine flüssigkristalline Phase her bestehend aus
10 % r-1-Cyan-cis-4-(trans-4-propylcyclohexyl)-1-propylcyclohexan,
20 % trans-1-p-Methoxphenyl-4-propylcyclohexan,
17 % trans-1-p-Ethoxyphenyl-4-propylcyclohexan,
7 % trans-1-p-Butoxyphenyl-4-propylcyclohexan,
3 % 4,4'-Bis(trans-4-propylcyclohexyl)-2-fluorbiphenyl,
3 % 4,4'-Bis(trans-4-pentylcyclohexyl)-2-fluorbiphenyl,
3 % 4-(trans-4-Pentylcyclohexyl)-4'-(trans-4-propylcyclohexyl)-2-fluorbiphenyl,
5 % 4-Butyl-4'-propyltolan,
5 % 4-Pentyl-4'-propyltolan,
5 % 4-Ethyl-4'-methoxytolan,
4 % 4-Methyl-4'-ethoxytolan,
6 % 3-Fluor-4-propyl-4'-(p-pentylphenyl)-biphenyl,
5 % 4-(trans-4-Propylcyclohexyl)-4'-ethoxytolan und
7 % 4-(trans-4-Propylcyclohexyl)-4'-propoxytolan.

Beispiel 37

Man stellt eine flüssigkristalline Phase her bestehend aus
10 % r-1-Cyan-cis-4-(trans-4-propylcyclohexyl)-1-propylcyclohexan,
20 % trans-1-p-Methoxphenyl-4-propylcyclohexan,
17 % trans-1-p-Ethoxyphenyl-4-propylcyclohexan,
7 % trans-1-p-Butoxyphenyl-4-propylcyclohexan,
3 % 4,4'-Bis(trans-4-propylcyclohexyl)-2-fluorbiphenyl,
3 % 4,4'-Bis(trans-4-pentylcyclohexyl)-2-fluorbiphenyl,
3 % 4-(trans-4-Pentylcyclohexyl)-4'-(trans-4-propylcyclohexyl)-2-fluorbiphenyl,
5 % 4-Butyl-4'-propyltolan,
5 % 4-Pentyl-4'-propyltolan,
5 % 4-Ethyl-4'-methoxytolan,
4 % 4-Methyl-4'-ethoxytolan,
6 % 2,3-Difluor-4-ethoxy-4'-(p-pentylphenyl)-biphenyl,
5 % 4-(trans-4-Propylcyclohexyl)-4'-ethoxytolan und
7 % 4-(trans-4-Propylcyclohexyl)-4'-propoxytolan.

Beispiel 38

Man stellt eine flüssigkristalline Phase her bestehend aus
5 % 3-Fluor-4-ethoxy-4'-pentylbiphenyl,

25 % 4-Pentyl-3'-fluor-4'-methoxytolan,
20 % 4-Butyl-3'-fluor-4'-ethoxytolan,
15 % 4-Pentyl-3'-fluor-4'-ethoxytolan,
20 % trans-1-p-Methoxyphenyl-4-propylcyclohexan,
5 % 4,4'-Bis-(trans-4-propylcyclohexyl)-2-fluorbiphenyl,
5 % 4,4'-Bis-(trans-4-pentylcyclohexyl)-2-fluorbiphenyl, und
5 % 4-(trans-4-Pentylcyclohexyl)-4'-(trans-4-propylcyclohexyl)-2-fluorbiphenyl.

Beispiel 39

Man stellt eine flüssigkristalline Phase her bestehend aus
10 % r-1-Cyan-cis-4-(trans-4-propylcyclohexyl)-1-propylcyclohexan,
20 % trans-1-p-Methoxphenyl-4-propylcyclohexan,
17 % trans-1-p-Ethoxyphenyl-4-propylcyclohexan,
7 % trans-1-p-Butoxyphenyl-4-propylcyclohexan,
3 % 4,4'-Bis(trans-4-propylcyclohexyl)-2-fluorbiphenyl,
3 % 4,4'-Bis(trans-4-pentylcyclohexyl)-2-fluorbiphenyl,
3 % 4-(trans-4-Pentylcyclohexyl)-4'-(trans-4-propylcyclohexyl)-2-fluorbiphenyl,
5 % 4-Butyl-4'-propyltolan,
5 % 4-Pentyl-4'-propyltolan,
5 % 4-Ethyl-4'-methoxytolan,
4 % 4-Methyl-4'-ethoxytolan,
6 % 3-Cyan-4-ethoxy-4'-pentylbiphenyl,
5 % 4-(trans-4-Propylcyclohexyl)-4'-ethoxytolan und
7 % 4-(trans-4-Propylcyclohexyl)-4'-propoxytolan.

Beispiel 40

Man stellt eine flüssigkristalline Phase her bestehend aus
30 % 4-Pentyl-3'-fluor-4'-methoxytolan,
20 % 2'-Fluor-4-ethoxy-4'-(p-pentylphenyl)-biphenyl,
15 % 3-Flour-4-ethoxy-4'-(p-pentylphenyl)-biphenyl,
20 % trans-1-p-Methoxyphenyl-4-propylcyclohexan,
5 % 4,4'-Bis-(trans-4-propylcyclohexyl)-2-fluorbiphenyl,
5 % 2-Fluor-4-ethoxy-4'-propylbiphenyl und
5 % 4-(trans-4-Pentylcyclohexyl)-4'-(trans-4-propylcyclohexyl)-2-fluorbiphenyl.

## Patentansprüche

1. Flüssigkristalline Phase für elektrooptische Anzeigeelemente basierend auf dem ECB-Effekt enthaltend zwei Komponenten A und B, die ihrerseits aus einer oder mehreren Einzelverbindungen bestehen, wobei Komponente A aus einer oder mehreren Einzelverbindungen besteht, die eine dielektrische Anisotropie von $\Delta\epsilon \leqq -0{,}5$ haben, und der flüssigkristallinen Phase eine dielektrische Anisotropie $\leqq -0{,}3$ verleiht, Komponente B eine ausgeprägte Nematogenität und eine Viskosität von nicht mehr als 30 mPa.s bei 20 °C aufweist, und gegebenenfalls eine Komponente C mit hohem Klärpunkt von mindestens 150 °C, um in der flüssigkristallinen Phase einen Klärpunkt von mindestens 60° zu induzieren, dadurch gekennzeichnet, daß sie eine weitere Komponente D mit höchstens schwach positiver dielektrischer Anisotropie $\leqq 1{,}0$ und einer optischen Anisotropie von mindestens 0,2 enthält, wobei zur Erzielung besonders kurzer Schaltzeiten die Komponente A auch ganz oder teilweise durch geeignete Einzelverbindungen der Komponente D mit deutlich negativer dielektrischer Anisotropie ersetzt sein können.

2. Flüssigkristalline Phase nach Anspruch 1, dadurch gekennzeichnet, daß Komponente A eine oder mehrere Verbindungen mit einem Strukturelement

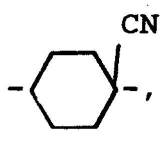, -CHCN-, 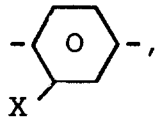, 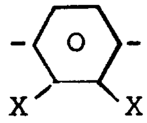, 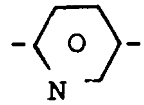 oder 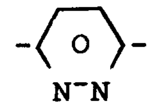

enthält, worin X Halogen oder CN bedeutet.

**3.** Flüssigkristalline Phase nach Anspruch 1 oder 2, dadurch gekennzeichnet, daß Komponente B monotrop oder enantiotrop nematisch ist, keine smektischen Phasen aufweist und in Flüssigkristallmischungen das Auftreten von smektischen Phasen bis zu sehr tiefen Temperaturen verhindert.

**4.** Flüssigkristalline Phase nach Anspruch 3, dadurch gekennzeichnet, daß Komponente B mindestens eine Verbindung der Formel V enthält,

$R^1$-$A^5$-$Z^1$-$A^6$-$R^2$ V

worin

| | |
|---|---|
| $R^1$ und $R^2$ | jeweils unabhängig voneinander eine Alkylgruppe mit jeweils 1 bis 15 C-Atomen, worin auch eine oder mehrere $CH_2$-Gruppen durch eine Gruppierung ausgewählt aus der Gruppe -O-, -S-, -CO-, -CH-Halogen-, -CHCN-, -O-CO-, -O-COO-, -CO-O- und -CH=CH- oder auch durch eine Kombination von zwei geeigneten Gruppierungen ersetzt sein können, wobei zwei Heteroatome nicht direkt miteinander verknüpft sind, |
| $Z^1$ | -CO-O-, -O-CO-, $-CH_2CH_2-$, $-OCH_2-$, $-CH_2O-$ oder eine Einfachfindung, und |
| $A^5$ und $A^6$ | jeweils unabhängig voneinander trans-1,4-Cyclohexylen oder unsubstituiertes oder durch Fluor substituiertes 1,4-Phenylen bedeuten. |

**5.** Flüssigkristalline Phase nach einem der Ansprüche 1 bis 4, dadurch gekennzeichnet, daß Komponente D mindestens eine Tolanverbindung mit dem Strukturelement

$-Q^1-C\equiv C-Q^2-$

enthält, worin

| | |
|---|---|
| $Q^1$ und $Q^2$ | jeweils unabhängig voneinander unsubstituiertes oder ein- oder mehrfach durch Halogenatome, $CH_3$- und/oder Nitrilgruppen substituiertes 1,4-Phenylen bedeutet, und eine der Gruppen $Q^1$ und $Q^2$ auch Pyridin-2,5-diyl sein kann. |

**6.** Flüssigkristalline Phase nach Anspruch 1, dadurch gekennzeichnet, daß Komponente A mindestens eine Verbindung der Formel I enthält,

$R^1$-$(A^o$-$Z^o)_p$-A-$R^2$ I

worin

| | |
|---|---|
| $R^1$ und $R^2$ | jeweils unabhängig voneinander eine Alkylgruppe mit jeweils 1 bis 15 C-Atomen, worin auch eine oder mehrere $CH_2$-Gruppen durch eine Gruppierung ausgewählt aus der Gruppe -O-, -S-, -CO-, -CH-Halogen-, -CHCN-, -O-CO-, -O-COO-, -CO-O- und -CH=CH- oder auch durch eine Kombination von zwei geeigneten Gruppierungen ersetzt sein können, wobei zwei Heteroatome nicht direkt miteinander verknüpft sind, |

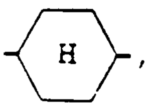, 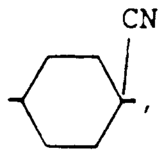, 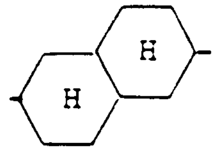, 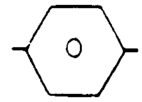,

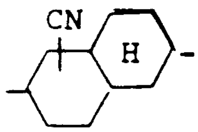, 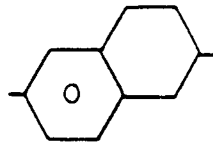 oder 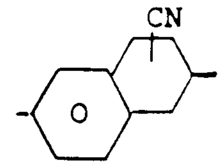

oder eine dieser Gruppen, worin eine oder mehrere $CH_2$-Gruppen durch O und/oder S oder aliphatische und/oder aromatische CH-Gruppen durch N ersetzt sind,

A° jeweils unabhängig voneinander unsubstituiertes oder ein- oder mehrfach durch Halogenatome, $CH_3$- und/oder Nitrilgruppen substituiertes 1,4-Cyclohexylen, worin auch eine oder zwei nicht benachbarte $CH_2$-Gruppen durch -O- und/oder -S- und/oder eine

$$-\overset{|}{C}H-CH_2-\text{Gruppierung}$$

durch

$$-\overset{|}{C}=N-$$

ersetzt sein können (Cy), oder unsubstituiertes oder ein- oder mehrfach durch Halogenatome, $CH_3$- und/oder Nitrilgruppen substituiertes 1,4-Phenylen, worin auch eine oder mehrere CH-Gruppen durch N ersetzt sein können (Ph) bedeutet, einer der Reste A° auch 2,6-Naphthylen (Na) oder Tetrahydro-2,6-naphthylen (4H-Na), gegebenenfalls durch Halogen oder CN substituiert,

Z° jeweils unabhängig voneinander -CO-O-, -O-CO-, $-CH_2O-$, $-OCH_2-$, $-CH_2CH_2-$, -CHCN-$CH_2$-, $-CH_2$-CHCN- oder eine Einfachbindung, und

p 1, 2 oder 3, oder im Falle A = Tetra- oder Octahydrophenanthren auch O bedeutet, wobei im Falle A =

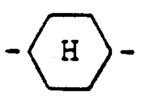, 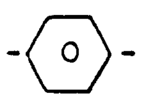, 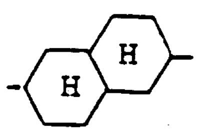 oder 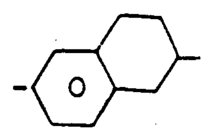

mindestens eine Gruppe Z° $-CHCNCH_2-$ oder $-CH_2CHCN-$ bedeutet und/oder in mindestens einer der Gruppen $R^1$ und $R^2$ mindestens eine $CH_2$-Gruppe durch -CHCN- ersetzt ist.

**7.** Phase nach einem der Ansprüche 1 bis 6, dadurch gekennzeichnet, daß sie mindestens eine Verbindung der Formel II enthält,

$$R^3-(A^1-Z^1)_m-A-(Z^2-A^2)_n-R^4 \qquad II$$

worin

$R^3$ und $R^4$ jeweils unabhängig voneinander eine Alkylgruppe mit jeweils 1 bis 15 C-Atomen, worin auch eine oder mehrere $CH_2$-Gruppen durch eine Gruppierung ausgewählt aus

der Gruppe -O-, -S-, -CO-, -CH-Halogen-, -CHCN-, -O-CO-, -O-COO-, -CO-O- und -CH = CH- oder auch durch eine Kombination von zwei geeigneten Gruppierungen ersetzt sein können, wobei zwei Heteroatome nicht direkt miteinander verknüpft sind,

$A^1$ und $A^2$ jeweils unabhängig voneinander unsubstituiertes oder ein- oder mehrfach durch Halogenatome, $CH_3$- und/oder Nitrilgruppen substituiertes 1,4-Cyclohexylen, worin auch eine oder zwei nicht benachbarte $CH_2$-Gruppen durch -O- und/oder -S- und/oder eine

$$-\overset{|}{C}H-CH_2-\text{ Gruppierung}$$

durch

$$-\overset{|}{C}=N-$$

ersetzt sein können (Cy), oder unsubstituiertes oder ein- oder mehrfach durch Halogenatome, $CH_3$- und/oder Nitrilgruppen substituiertes 1,4-Phenylen, worin auch eine oder mehrere CH-Gruppen durch N ersetzt sein können (Ph) bedeutet, einer der Reste $A^o$ auch 2,6-Naphthylen (Na) oder Tetrahydro-2,6-naphthylen (4H-Na), gegebenenfalls durch Halogen oder CN substituiert,

A 2-Fluor-1,4-phenylen, 2,3-Difluor-1,4-phenylen oder in 2-, 3-, 2'- und/oder 3'-Position ein oder mehrfach durch Fluor substituiertes 4,4'-Biphenylyl,

$Z^1$ und $Z^2$ jeweils -CO-O-, -O-CO-, $-CH_2CH_2-$, $-OCH_2-$, $-CH_2O-$ oder eine Einfachbindung,

m 1 oder 2 und

n 0 oder 1

bedeuten,

wobei für m = 2 die beiden Gruppen $A^1$ und $Z^1$ gleich oder voneinander verschieden sein können.

**8.** Phase nach einem der Ansprüche 1 bis 7, dadurch gekennzeichnet, daß sie mindestens eine Verbindung der Formel III enthält,

$R^3-(A^3-Z^1)_o-Q^1-C\equiv C-Q^2-(Z^2-A^4)_p-R^4$ III

worin

$R^3$ und $R^4$ jeweils unabhängig voneinander eine Alkylgrupe mit jeweils 1 bis 15 C-Atomen, worin auch eine oder mehrere $CH_2$-Gruppen durch eine Gruppierung ausgewählt aus der Gruppe -O-, -S-, -CO-, -CH-Halogen-, -CHCN-, -O-CO-, -O-COO-, -CO-O- und -CH = CH-oder auch durch eine Kombination von zwei geeigneten Gruppierungen ersetzt sein können, wobei zwei Heteroatome nicht direkt miteinander verknüpft sind,

$Q^1$ und $Q^2$ jeweils unabhängig voneinander unsubstituiertes oder ein- oder mehrfach durch Halogenatome, $CH_3$- und/oder Nitrilgruppen substituiertes 1,4-Phenylen bedeutet, eine der Gruppen $Q^1$ und $Q^2$ auch Pyridin-2,5-diyl,

$A^3$ und $A^3$ jeweils unabhängig voneinander trans-1,4-Cyclohexylen, worin auch eine oder zwei nicht benachbarte $CH_2$-Gruppen durch -O- und/oder -S- ersetzt sein können, oder 1,4-Phenylen, worin auch eine oder mehrere CH-Gruppen durch N ersetzt sein können,

o und p jeweils unabhängig voneinander 0 oder 1,

und $Z^1$ und $Z^2$ die bei Formel II angegebene Bedeutung haben.

**9.** Phase nach einem der Ansprüche 1 bis 8, dadurch gekennzeichnet, daß sie mindestens eine Verbindung der Formel IV enthält,

$R^3-(A^1-Z^1)_m-Q^1-C\equiv C-R^5$ IV

worin $R^5$ eine Alkylgruppe mit 1 bis 15 C-Atomen bedeutet, und $R^3$, $A^1$, $Z^1$, $Q^1$ und m die oben angegebene Bedeutung haben.

10. Phase nach einem der Ansprüche 1 bis 9, dadurch gekennzeichnet, daß Komponente D in der Phase das Verhältnis der elastischen Konstanten $K_3/K_1$ auf mindestens 1,2 erhöht.

11. Verwendung von Tolanverbindungen der Formel III nach Anspruch 8 als Komponenten flüssigkristalliner Phasen für elektrooptische Anzeigeelemente basierend auf dem ECB-Effekt.

12. Elektrooptisches Anzeigeelement basierend auf dem ECB-Effekt, dadurch gekennzeichnet, daß es als Dielektrikum eine Phase nach einem der Ansprüche 1 bis 10 enthält.

## Claims

1. Liquid-crystalline phase for electro-optical display elements based on the ECB effect, containing two components A and B, which themselves comprise one or more individual compounds, where component A comprises one or more individual compounds which have a dielectric anisotropy $\Delta\epsilon$ of $\leqq$ -0.5, and gives the liquid-crystalline phase a dielectric anisotropy of $\leqq$ -0.3, component B has pronounced nematogeneity and a viscosity of not greater than 30 mPa.s at 20 °C, and optionally a component C having a high clearing point of at least 150 °C in order to induce a clearing point of at least 60 ° in the liquid-crystalline phase, characterised in that it contains a further component D having at most slightly positive dielectric anisotropy of $\leqq$ 1.0 and an optical anisotropy of at least 0.2, where, in order to achieve particularly short response times, it is also possible for all or some of component A to be replaced by suitable individual compounds of component D of considerably negative dielectric anisotropy.

2. Liquid-crystalline phase according to Claim 1, characterised in that component A contains one or more compounds having a structural element

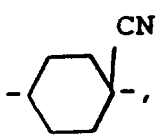 -CHCN-, 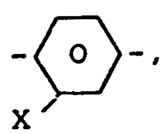 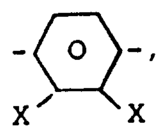 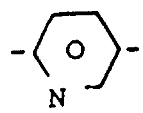 or 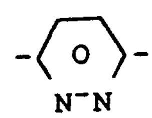

in which X is halogen or CN.

3. Liquid-crystalline phase according to Claim 1 or 2, characterised in that component B is monotropically or enantiotropically nematic, has no smectic phases and prevents the occurrence of smectic phases in liquid-crystal mixtures down to very low temperatures.

4. Liquid-crystalline phase according to Claim 3, characterised in that component B contains at least one compound of the formula V

$R^1\text{-}A^5\text{-}Z^1\text{-}A^6\text{-}R^2$    V

in which

| | |
|---|---|
| $R^1$ and $R^2$ | are each, independently of one another, an alkyl group, in each case having 1 to 15 carbon atoms, and in which one or more $CH_2$ groups may be replaced by a group selected from the series consisting of -O-, -S-, -CO-, -CH-halogen-, -CHCN-, -O-CO-, -O-COO-, -CO-O- and -CH=CH-, or alternatively by a combination of two suitable groups, where two hetero atoms are not linked directly to one another, |
| $Z^1$ | is -CO-O-, -O-CO-, $-CH_2CH_2-$, $-OCH_2-$, $-CH_2O-$ or a single bond, and |
| $A^5$ and $A^6$ | are each, independently of one another, trans-1,4-cyclohexylene or unsubstituted or fluorine-substituted 1,4-phenylene. |

5. Liquid-crystalline phase according to one of Claims 1 to 4, characterised in that component D contains at least one tolan compound having the structural element

$-Q^1\text{-}C\equiv C\text{-}Q^2-$

in which

$Q^1$ and $Q^2$ are each, independently of one another, 1,4-phenylene which is unsubstituted or monosubstituted or polysubstituted by halogen atoms, $CH_3$ and/or nitrile groups, and one of the groups $Q^1$ and $Q^2$ may alternatively be pyridine-2,5-diyl.

**6.** Liquid-crystalline phase according to Claim 1, characterised in that component A contains at least one compound of the formula I

$R^1$-($A^o$-$Z^o$)$_p$-A-$R^2$ I

in which

$R^1$ and $R^2$ are each, independently of one another, an alkyl group, in each case having 1 to 15 carbon atoms, and in which one or more $CH_2$ groups may be replaced by a group selected from the series consisting of -O-, -S-, -CO-, -CH-halogen-, -CHCN-, -O-CO-, -O-COO-, -CO-O- and -CH=CH-, or alternatively by a combination of two suitable groups, where two hetero atoms are not linked directly to one another,

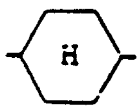,
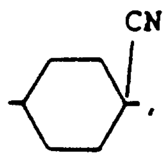,
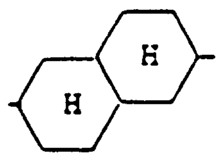,
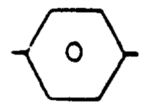,

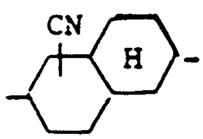,
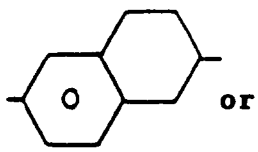 or
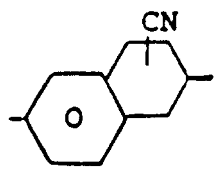

or one of these groups in which one or more $CH_2$ groups have been replaced by O and/or S or aliphatic and/or aromatic CH groups have been replaced by N,

$A^o$ is in each case, independently of one another, 1,4-cyclohexylene which is unsubstituted or monosubstituted or polysubstituted by halogen atoms, $CH_3$ and/or nitrile groups and in which one or two non-adjacent $CH_2$ groups may be replaced by -O- and/or -S-, and/or one

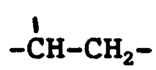 group

may be replaced by

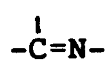

(Cy), or 1,4-phenylene which is unsubstituted or monosubstituted or polysubstituted by halogen atoms, $CH_3$ and/or nitrile groups and in which one or more CH groups may be replaced by N (Ph), and one of the radicals $A^o$ is alternatively 2,6-naphthylene (Na) or tetrahydro-2,6-naphthylene (4H-Na), optionally substituted by halogen or CN,

$Z^o$ is in each case, independently of one another, -CO-O-, -O-CO-, $-CH_2O-$, $-OCH_2-$, $-CH_2CH_2-$, $-CHCN-CH_2-$, $-CH_2-CHCN-$ or a single bond, and

p is 1, 2 or 3, or in the case where A is tetra- or octahydrophenanthrene, is alternatively O, where in the case where A is

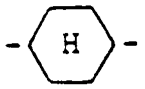, 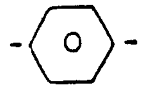, 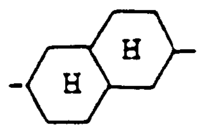 or 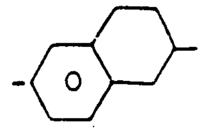

at least one group $Z^o$ is $-CHCNCH_2-$ or $-CH_2CHCN-$and/or at least one $CH_2$ group in at least one of the groups $R^1$ and $R^2$ has been replaced by -CHCN-.

**7.** Phase according to one of Claims 1 to 6, characterised in that it contains at least one compound of the formula II

$R^3-(A^1-Z^1)_m-A-(Z^2-A^2)_n-R^4$ II

in which

- $R^3$ and $R^4$ are each, independently of one another, an alkyl group, in each case having 1 to 15 carbon atoms, and in which one or more $CH_2$ groups may be replaced by a group selected from the series consisting of -O-, -S-, -CO-, -CH-halogen-, -CHCN-, -O-CO-, -O-COO-, -CO-O- and -CH=CH-, or alternatively by a combination of two suitable groups, where two hetero atoms are not linked directly to one another,
- $A^1$ and $A^2$ are each, independently of one another, 1,4-cyclohexylene which is unsubstituted or monosubstituted or polysubstituted by halogen atoms, $CH_3$ and/or nitrile groups and in which one or two non-adjacent $CH_2$ groups may be replaced by -O- and/or -S-, and/or one

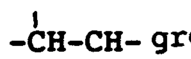 group

may be replaced by

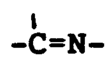

(Cy), or 1,4-phenylene which is unsubstituted or monosubstituted or polysubstituted by halogen atoms, $CH_3$ and/or nitrile groups and in which one or more CH groups may be replaced by N (Ph), and one of the radicals $A^o$ is alternatively 2,6-naphthylene (Na) or tetrahydro-2,6-naphthylene (4H-Na), optionally substituted by halogen or CN,
- A is 2-fluoro-1,4-phenylene, 2,3-difluoro-1,4-phenylene, or 4,4'-biphenylyl which is monosubstituted or polysubstituted by fluorine in the 2-, 3-, 2'- and/or 3'-position,
- $Z^1$ and $Z^2$ are each -CO-O-, -O-CO-, $-CH_2CH_2-$, $-OCH_2-$, $-CH_2O-$or a single bond,
- m is 1 or 2, and
- n is 0 or 1,

where, for m = 2, the two groups $A^1$ and $Z^1$ may be identical to or different from one another.

**8.** Phase according to one of Claims 1 to 7, characterised in that it contains at least one compound of the formula III

$R^3-(A^3-Z^1)_o-Q^1-C=C-Q^2-(Z^2-A^4)_p-R^4$ III

in which

- $R^3$ and $R^4$ are each, independently of one another, an alkyl group, in each case having 1 to 15 carbon atoms, and in which one or more $CH_2$ groups may be replaced by a group selected from the series consisting of -O-, -S-, -CO-, -CH-halogen-, -CHCN-, -O-CO-, -O-COO-, -CO-O- and -CH=CH-, or alternatively by a combination of two suitable groups, where two hetero atoms are not linked directly to one another,
- $Q^1$ and $Q^2$ are each, independently of one another, 1,4-phenylene which is unsubstituted or monosubstituted or polysubstituted by halogen atoms, $CH_3$ and/or nitrile groups, and

one of the groups $Q^1$ and $Q^2$ may alternatively be pyridine-2,5-diyl,

$A^3$ and $A^4$ are each, independently of one another, trans-1,4-cyclohexylene in which, in addition, one or two non-adjacent $CH_2$ groups may be replaced by -O- and/or -S-, or 1,4-phenylene in which, in addition, one or more CH groups may replaced by N,

o and p are each, independently of one another, 0 or 1,

and $Z^1$ and $Z^2$ are defined as for formula II.

**9.** Phase according to one of Claims 1 to 8, characterised in that it contains at least one compound of the formula IV

$$R^3\text{-}(A^1\text{-}Z^1)_m\text{-}Q^1\text{-}C=C\text{-}R^5 \qquad IV$$

in which $R^5$ is an alkyl group having 1 to 15 carbon atoms, and $R^3$, $A^1$, $Z^1$, $Q^1$ and m are as defined above.

**10.** Phase according to one of Claims 1 to 9, characterised in that component D increases the ratio between the elastic constants $K_3/K_1$ in the phase to at least 1.2.

**11.** Use of tolan compounds of the formula III according to Claim 8 as components of liquid-crystalline phases for electro-optical display elements based on the ECB effect.

**12.** Electro-optical display element based on the ECB effect, characterised in that it contains, as dielectric, a phase according to one of Claims 1 to 10.

## Revendications

**1.** Phase cristalline liquide pour éléments d'affichage électro-optiques à base d'effet ECB contenant deux composants A et B, qui de leur côté sont constitués d'un ou plusieurs composés isolés, où le composant A se compose d'un ou plusieurs composés isolés, qui ont une anisotropie diélectrique $\Delta\epsilon \leq -0{,}5$ , et la phase cristalline liquide confère une anisotropie diélectrique $\leq -0{,}3$, le composant B présente une nématoénité prononcée et une viscosité d'au plus 30 mPa.s à 20 °C, et éventuellement un composant C à point de clair élevé d'au moins 150 °C, pour induire dans la phase cristalline liquide un point de clair d'au moins 60 °, caractérisée en ce qu'elle contient un autre composant D ayant une anisotropie diélectrique au plus faiblement positive $\leq$ 1,0 et une anisotropie optique d'au moins 0,2 , où pour obtenir des temps de commutation particulièrement courts le composant A peut également être entièrement ou partiellement remplacé par des composés isolés appropriés du composant D ayant une anisotropie diélectrique nettement négative.

**2.** Phase cristalline liquide selon la revendication 1, caractérisée en ce que le composant A contient un ou plusieurs composés ayant un élément structural

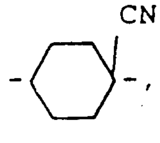 -CHCN-, 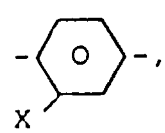 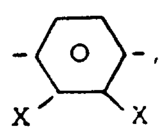 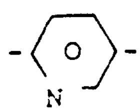 ou 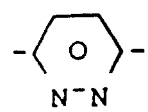

où X représente un halogène ou CN.

**3.** Phase cristalline liquide selon la revendication 1 ou 2, caractérisée en ce que le composant B est nématiquement monotrope ou énantiotrope, ne présente pas de phases smectiques et empêche dans les mélanges de cristaux liquides l'apparition de phases smectiques jusqu'à des températures très basses.

**4.** Phase cristalline liquide selon la revendication 3, caractérisée en ce que le composant B contient au moins un composé de formule V

$R^1$-$A^5$-$Z^1$-$A^6$-$R^2$ V

où
$R^1$ et $R^2$ représentent chacun indépendamment l'un de l'autre un groupe alcoyle en $C_1$ à $C_{15}$, où également un ou plusieurs groupes $CH_2$ peuvent être remplacés par un groupement choisi dans le groupe -O-, -S-, -CO-, -CH-halogène-, -CHCN-, -O-CO-, -O-COO-, -CO-O- et -CH = CH- ou encore par une combinaison de deux groupements appropriés, où deux hétéroatomes ne sont pas directement reliés entre eux,
$Z^1$ représente -CO-O-, -O-CO-, -$CH_2CH_2$-, -$OCH_2$-, -$CH_2O$- ou une liaison simple, et
$A^5$ et $A^6$ représentent à chaque fois indépendamment l'un de l'autre un trans-1,4-cyclohexylène ou un 1,4-phénylène non substitué ou substitué par un fluor.

**5.** Phase cristalline liquide selon l'une des revendications 1 à 4, caractérisé en ce que le composant D contient au moins un composé de tolane ayant un élément structural

-$Q^1$-C≡C-$Q^2$-

où
$Q^1$ et $Q^2$ représentent chacun indépendamment l'un de l'autre un 1,4-phénylène non substitué ou mono- ou polysubstitué par des atomes d'halogène, des groupes $CH_3$ et/ou nitrile, et l'un des groupes $Q^1$ et $Q^2$ peut également être un pyridine-2,5-diyle.

**6.** Phase cristalline liquide selon la revendication 1, caractérisée en ce que le composant A contient un composé de formule I

$R^1$-$(A^o$-$Z^o)_p$-A-$R^2$ I

où
$R^1$ et $R^2$ représentent chacun indépendamment l'un de l'autre un groupe alcoyle en $C_1$ à $C_{15}$ , où également un ou plusieurs groupes $CH_2$ peuvent être remplacés par un groupement choisi dans le groupe -O-, -S-, -CO-, -CH-halogène-, -CHCN-, -O-CO-, -O-COO-, -CO-O- et -CH = CH- ou encore par une combinaison de deux groupements appropriés, où deux hétéroatomes ne sont pas directement reliés ensemble,

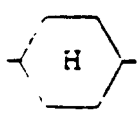, 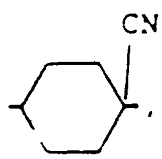, 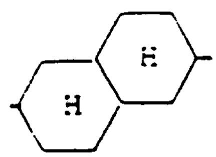, 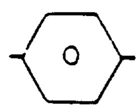,

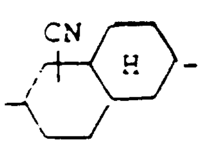, 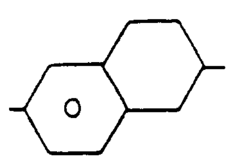 ou 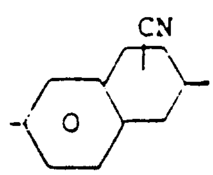

ou un de ces groupes, où un ou plusieurs groupes $CH_2$ sont remplacés par O et/ou S ou des groupes CH aliphatiques et/ou aromatiques par N,
$A^o$ représente à chaque fois un 1,4-cyclohexylène indépendamment non substitué ou mono- ou polysubstitué par des atomes d'halogène, des groupes $CH_3$ et/ou nitrile, où également un ou plusieurs groupes $CH_2$ non voisins peuvent être remplacés par -O- et/ou -S- et/ou un groupement

$-\overset{|}{C}H-CH_2-$

peut être remplacé par

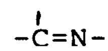

(Cy), ou un 1,4-phénylène non substitué ou mono- ou polysubstitué par des atomes d'halogène, des groupes $CH_3$ et/ou nitrile, où également un ou plusieurs groupes CH peuvent être remplacés par N (Ph), l'un des radicaux A° peut également représenter un 2,6-naphtylène (Na) ou un tétrahydro-2,6-naphtylène (4H-Na), éventuellement substitué par un halogène ou CN,
Z° représente à chaque fois indépendamment -CO-O-, -O-CO-, $-CH_2O-$, $-OCH_2-$, $-CH_2CH_2-$, -CHCN-$CH_2$-, $-CH_2$-CHCN- ou une liaison simple, et
p vaut 1, 2 ou 3, ou encore, dans le cas où A = tétra- ou octahydrophénanthrène, 0, où dans le cas où A =

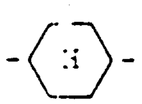 , 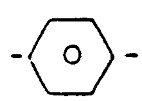 , 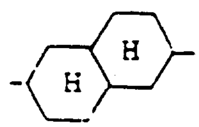 ou 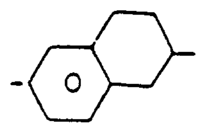

au moins un groupe Z° représente $-CHCNCH_2-$ ou $-CH_2CHCN-$ et/ou dans au moins un des groupes $R^1$ et $R^2$ au moins un groupe $CH_2$ est remplacé par -CHCN-.

**7.** Phase selon l'une des revendications 1 à 6, caractérisée en ce qu'elle contient au moins un composé de formule II

$R^3-(A^1-Z^1)_m-A-(Z^2-A^2)_n-R^4$ II

dans laquelle
$R^3$ et $R^4$ représentent à chaque fois indépendamment l'un de l'autre un groupe alcoyle en $C_1$ à $C_{15}$, où un ou plusieurs groupes $CH_2$ peuvent être remplacés par un groupement choisi dans le groupe -O-, -S-, -CO-, -CH-halogène-, -CHCN-, -O-CO-, -O-COO-, -CO-O- et -CH=CH- ou encore par une combinaison de deux groupements appropriés, où deux hétéroatomes ne sont pas directement reliés entre eux,
$A^1$ et $A^2$ représentent chacun indépendamment l'un de l'autre un 1,4-cyclohexylène non substitué ou mono- ou polysubstitué par des atomes d'halogène, des groupes $CH_3$ et/ou des groupes nitrile, où également un ou deux groupes $CH_2$ non voisins peuvent être remplacés par -O- et/ou -S- et/ou un groupement

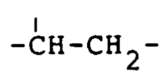

par

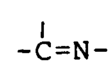

(Cy), ou un 1,4-phénylène non substitué ou mono- ou polysubstitué par des atomes d'halogène, des groupes $CH_3$ et/ou des groupes nitrile, où également un ou plusieurs groupes CH peuvent être remplacés par N (Ph), l'un des radicaux A° peut également être un 2,6-naphtylène (Na) ou un tétrahydro-2,6-naphtylène (4H-Na), éventuellement substitué par un halogène ou CN,
A représente un 2-fluoro-1,4-phénylène, un 2,3-difluoro-1,4-phénylène ou un 4,4'-biphénylyle mono- ou polysubstitué par un fluor en positions 2, 3, 2' et/ou 3',
$Z^1$ et $Z^2$ représentent chacun -CO-O-, -O-CO-,
$-CH_2-CH_2-$, $-OCH_2-$, $-CH_2O-$ ou une liaison simple,
m vaut 1 ou 2 et
n vaut 0 ou 1,
où pour m = 2 les deux groupes $A^1$ et $Z^1$ peuvent être identiques ou différents.

**8.** Phase selon l'une des revendications 1 à 7, caractérisée en ce qu'elle contient au moins un composé de formule III

$R^3\text{-}(A^3\text{-}Z^1)_o\text{-}Q^1\text{-}C{\equiv}C\text{-}Q^2\text{-}(Z^2\text{-}A^4)_p\text{-}R^4$ III

dans laquelle
$R^3$ et $R^4$ représentent chacun indépendamment l'un de l'autre un groupe alcoyle en $C_1$ à $C_{15}$, ou également un ou plusieurs groupes $CH_2$ peuvent être remplacés par un groupement choisi dans le groupe -O-, -S-, -CO- , -CH-halogène-, -CHCN-, -O-CO-, -O-COO-, -CO-O- et -CH = CH- ou encore par une combinaison de deux groupements appropriés, où deux hétéroatomes ne sont pas directement reliés entre eux,
$Q^1$ et $Q^2$ représentent à chaque fois indépen-damment l'un de l'autre un 1,4-phénylène non substitué ou mono- ou polysubstitué par des atomes d'halogène, des groupes $CH_3$ et/ou nitrile, l'un des groupes $Q^1$ et $Q^2$ pouvent également représenter un pyridine-2,5-diyle,
$A^3$ et $A^4$ représentent chacun indépendamment l'un de l'autre un trans-1,4-cyclohexylène, où également un ou plusieurs groupes $CH_2$ non voisins peuvent être remplacés par -O- et/ou -S-, ou un 1,4-phénylène, où également un ou plusieurs groupes CH peuvent être remplacés par N,
o et p valent à chaque fois indépendamment l'un de l'autre 0 ou 1,
et $Z^1$ et $Z^2$ ont la signification donnée dans la formule II.

**9.** Phase selon l'une des revendications 1 à 8, caractérisée en ce qu'elle contient au moins un composé de formule IV

$R^3\text{-}(A^1\text{-}Z^1)_m\text{-}Q^1\text{-}C{\equiv}C\text{-}R^5$ IV

où $R^5$ représente un groupe alcoyle en $C_1$ à $C_{15}$ et $R^3$ , $A^1$ , $Z^1$ , $Q^1$ et m ont la signification donnée ci-dessus.

**10.** Phase selon l'une des revendications 1 à 9, caractérisée en ce que le compoant D ans la phase porte le rapport des constantes élastiques $K_3/K_1$ à au moins 1,2 .

**11.** Application de composés de tolane de formule III selon la revendication 8 comme composants de phases cristallines liquides pour éléments d'affichage électro-optiques à base d'effet ECB.

**12.** Elément d'affichage électro-optique à base d'effet ECB, caractérisé en ce qu'il contient comme diélectrique une phase selon l'une des revendications 1 à 10.